(19) Europäisches Patentamt
European Patent Office
Office européen des brevets

(11) EP 4 769 444 A1

(12) **EUROPEAN PATENT APPLICATION**
published in accordance with Art. 153(4) EPC

(43) Date of publication:
**01.07.2026 Bulletin 2026/27**

(21) Application number: **24859608.2**

(22) Date of filing: **22.08.2024**

(51) International Patent Classification (IPC):
***H01B 1/22*** (2006.01) ***C09J 9/02*** (2006.01)
***C09J 11/04*** (2006.01) ***C09J 163/00*** (2006.01)
***H01R 11/01*** (2006.01)

(52) Cooperative Patent Classification (CPC):
**C09J 9/02; C09J 11/04; C09J 163/00; H01B 1/22; H01R 11/01**

(86) International application number:
**PCT/JP2024/029862**

(87) International publication number:
**WO 2025/047575 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.08.2023 JP 2023137309**

(71) Applicant: **Sekisui Chemical Co., Ltd.**
**Osaka-shi, Osaka 530-8565 (JP)**

(72) Inventors:
- **OOATARI, Yuuta**
**Mishima-gun, Osaka 618-0021 (JP)**
- **YAMANAKA, Yuta**
**Kouka-shi, Shiga 528-8585 (JP)**
- **OOKURA, Kouki**
**Kouka-shi, Shiga 528-8585 (JP)**
- **NAGAI, Yasuharu**
**Mishima-gun, Osaka 618-0021 (JP)**
- **ISHIZUKA, Akari**
**Mishima-gun, Osaka 618-0021 (JP)**

(74) Representative: **Ter Meer Steinmeister & Partner Patentanwälte mbB**
**Nymphenburger Straße 4**
**80335 München (DE)**

# (54) ELECTROCONDUCTIVE PASTE, RFID INLAY, AND METHOD FOR PRODUCING RFID INLAY

(57) Provided is a conductive paste capable of 1) enhancing storage stability, and capable of 2) enhancing curability, 3) enhancing adhesiveness, 4) improving tackiness of a cured product, and 5) enhancing conduction reliability even when mounting is performed in a relatively short time. A conductive paste according to the present invention is a conductive paste containing: a curable compound; a curing agent; and a conductive filler, an exothermic onset temperature being 50°C or higher and 80°C or lower when the conductive paste is heated from 30°C to 200°C at a temperature increasing rate of 10°C/min and subjected to differential scanning calorimetry.

[FIG. 1.]

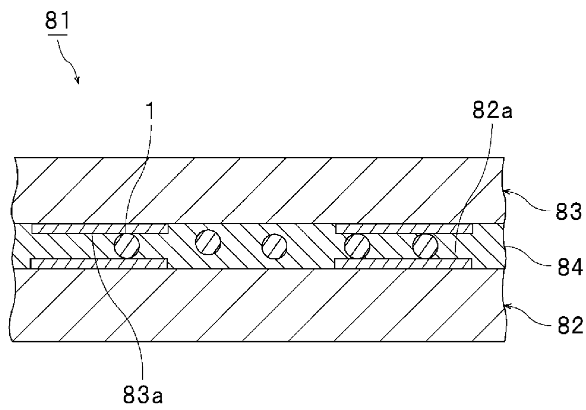


EP 4 769 444 A1

## Description

### TECHNICAL FIELD

The present invention relates to a conductive paste containing a conductive filler. The present invention also relates to an RFID inlay using the conductive paste and a method for producing an RFID inlay.

### BACKGROUND ART

A radio frequency identification (RFID) inlay capable of transmitting and receiving data in a non-contact manner is widely used for a non-contact RFID tag, a non-contact RFID card, and the like. In particular, an RFID inlay in an ultra high frequency (UHF) band (860 MHz to 960 MHz) attracts attention because of a long communication distance, and the RFID inlay in the UHF band is used for various articles and purposes such as a commutation ticket, inventory management, distribution management, and history management.

In the RFID inlay, a conductive paste containing a conductive filler and a binder resin may be used for adhesion and connection between a chip having an electrode on a surface and a substrate having a wiring (antenna pattern) on a surface.

In recent years, along with downsizing of electronic components using an RFID inlay, a chip used for the RFID inlay has also been downsized, and a conductive paste having high adhesiveness and capable of being disposed on a wiring with higher accuracy is required.

Patent Document 1 below discloses an adhesive applicable to an electronic component. The adhesive is an acrylic adhesive composition containing a radical initiator having a 10-hour half-life temperature of 80°C or lower, a vinylene-containing oligomer, and at least one diluent. The adhesive can be snap-cured at a low temperature, and a pot life of the adhesive at room temperature is 24 hours or more.

Patent Document 2 below discloses a conductive adhesive containing a polymerizable acrylic compound, an organic peroxide, and solder particles, in which a one-minute half-life temperature of the organic peroxide is lower than a solidus temperature of the solder particles.

### Related Art Document

### Patent Documents

Patent Document 1: JP 2006-144018 A
Patent Document 2: JP 2013-124330 A

### SUMMARY OF THE INVENTION

### PROBLEMS TO BE SOLVED BY THE INVENTION

In the conventional adhesives (conductive pastes) as described in Patent Documents 1 and 2, adhesiveness can be enhanced to some extent. However, in a conventional conductive paste, when an electronic component is produced (mounted) in an air atmosphere using the conductive paste, a polymerization reaction of the conductive paste does not sufficiently proceed due to an influence of oxygen, and an uncured portion may exist in a cured product of the conductive paste. As a result, there is a problem in that the adhesiveness cannot be sufficiently enhanced, the tackiness of a cured product cannot be improved, and the conduction reliability of an electronic component to be obtained cannot be sufficiently enhanced. This problem is more remarkable particularly when mounting is performed in a relatively short time (for example, within 15 seconds).

In general, when the curability of the adhesive (conductive paste) is enhanced, the pot life (pot life) tends to be shortened. With a conventional adhesive (conductive paste), it is difficult to enhance the curability of the adhesive (conductive paste) and enhance the storage stability.

An object of the present invention is to provide a conductive paste capable of 1) enhancing storage stability, and capable of 2) enhancing curability, 3) enhancing adhesiveness, 4) improving tackiness of a cured product, and 5) enhancing conduction reliability even when mounting is performed in a relatively short time. Another object of the present invention is to provide an RFID inlay using the conductive paste and a method for producing an RFID inlay.

## MEANS FOR SOLVING THE PROBLEMS

In the present specification, the following conductive paste, RFID inlay, and method for producing an RFID inlay are disclosed.

Item 1. A conductive paste containing: a curable compound; a curing agent; and a conductive filler, an exothermic onset temperature being 50°C or higher and 80°C or lower when the conductive paste is heated from 30°C to 200°C at a temperature increasing rate of 10°C/min and subjected to differential scanning calorimetry.

Item 2. A conductive paste containing: a curable compound; a curing agent; and a conductive filler, the curing agent containing a secondary thiol curing agent or a primary thiol curing agent having no ester skeleton, and the conductive filler being a conductive particle including a resin particle and a conductive layer disposed on a surface of the resin particle, or a metal particle having a melting point of higher than 450°C.

Item 3. The conductive paste according to item 1 or 2, in which the curable compound contains a glycidylamine-type epoxy compound.

Item 4. The conductive paste according to any one of items 1 to 3, in which the curing agent contains a thiol curing agent having two or more thiol groups.

Item 5. The conductive paste according to any one of items 1 to 4, in which the curing agent contains a thiol curing agent having a structure represented by the following Formula (1):

[Chemical 1]

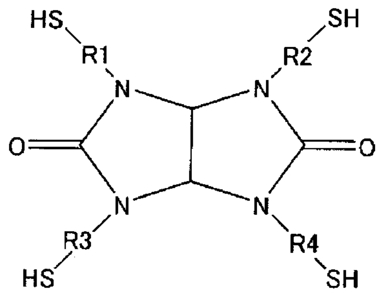

···(1)

In the Formula (1), R1, R2, R3, and R4 each represent an alkylene group having 1 to 5 carbon atoms.

Item 6. The conductive paste according to any one of items 1 to 5, in which the curing agent contains a secondary thiol curing agent or a primary thiol curing agent having no ester skeleton, and a total content of the secondary thiol curing agent and the primary thiol curing agent having no ester skeleton in 100 wt% of the conductive paste is 5 wt% or more and 50 wt% or less.

Item 7. The conductive paste according to any one of items 1 to 6, in which the curing agent contains a secondary thiol curing agent.

Item 8. The conductive paste according to any one of items 1 to 7, in which an exothermic end temperature is 85°C or higher and 180°C or lower when the conductive paste is heated from 30°C to 200°C at a temperature increasing rate of 10°C/min and subjected to differential scanning calorimetry.

Item 9. The conductive paste according to any one of items 1 to 8, in which an absolute value of a difference between an exothermic onset temperature and an exothermic end temperature is 5°C or higher and 100°C or lower when the conductive paste is heated from 30°C to 200°C at a temperature increasing rate of 10°C/min and subjected to differential scanning calorimetry.

Item 10. The conductive paste according to any one of items 1 to 9, in which the curing agent contains a microcapsule-type curing agent.

Item 11. The conductive paste according to item 10, in which a content of the microcapsule-type curing agent in 100 wt% of the conductive paste is 5 wt% or more and 40 wt% or less.

Item 12. The conductive paste according to any one of items 1 to 11, in which a particle size of the conductive filler is 10 μm or less.

Item 13. The conductive paste according to any one of items 1 to 12, in which a content of the conductive filler in 100 wt% of the conductive paste is 0.1 wt% or more and 50 wt% or less.

Item 14. The conductive paste according to any one of items 1 to 13, in which the curing agent contains an amine curing agent that is a solid at 25°C.

Item 15. The conductive paste according to any one of items 1 to 14, further containing a chelating agent.

Item 16. The conductive paste according to item 15, in which the chelating agent contains a boric acid ester.

Item 17. The conductive paste according to any one of items 1 to 16, further containing a non-conductive filler.

Item 18. The conductive paste according to item 17, in which a ratio of a particle size of the non-conductive filler to a particle size of the conductive filler is 0.5 or less.

Item 19. The conductive paste according to any one of items 1 to 18, which is used for obtaining an RFID inlay.

Item 20. An RFID inlay comprising: a substrate having a wiring on a surface; a chip having an electrode on a surface; and an adhesive portion bonding the substrate and the chip, a material of the adhesive portion being the conductive paste according to any one of items 1 to 19, and the wiring and the electrode being electrically connected by the conductive filler in the adhesive portion.

Item 21. A method for producing an RFID inlay, including: a first disposing step of disposing the conductive paste according to any one of items 1 to 19 on a surface of a substrate having a wiring on a surface; a second disposing step of disposing a chip having an electrode on a surface on a surface of the conductive paste opposite to the substrate side; and a bonding step of heating and pressurizing the conductive paste to form an adhesive portion bonding the substrate and the chip with the conductive paste, and electrically connecting the wiring and the electrode by the conductive filler in the adhesive portion.

Item 22. The method for producing an RFID inlay according to item 21, in which the substrate has an elongated shape, and in the first disposing step, the second disposing step, and the bonding step, the substrate having an elongated shape is conveyed by a roll-to-roll method to produce an RFID inlay.

## EFFECT OF THE INVENTION

A conductive paste according to the present invention is a conductive paste containing: a curable compound; a curing agent; and a conductive filler, an exothermic onset temperature being 50°C or higher and 80°C or lower when the conductive paste is heated from 30°C to 200°C at a temperature increasing rate of 10°C/min and subjected to differential scanning calorimetry. In the conductive paste according to the present invention, with the above configuration, it is possible to 1) enhance storage stability, and 2) enhance curability, 3) enhance adhesiveness, 4) improve tackiness of a cured product, and 5) enhance conduction reliability even when mounting is performed in a relatively short time.

Another conductive paste according to the present invention contains: a curable compound; a curing agent; and a conductive filler, the curing agent containing a secondary thiol curing agent or a primary thiol curing agent having no ester skeleton, and the conductive filler being a conductive particle including a resin particle and a conductive layer disposed on a surface of the resin particle, or a metal particle having a melting point of higher than 450°C. In the conductive paste according to the present invention, with the above configuration, it is possible to 1) enhance storage stability, and 2) enhance curability, 3) enhance adhesiveness, 4) improve tackiness of a cured product, and 5) enhance conduction reliability even when mounting is performed in a relatively short time.

## BRIEF DESCRIPTION OF DRAWING

[Fig. 1] Fig. 1 is a cross-sectional view schematically illustrating an RFID inlay using a conductive paste according to a first embodiment of the present invention.

## MODES FOR CARRYING OUT THE INVENTION

Hereinafter, details of the present invention will be described.

(Conductive paste)

A conductive paste (first conductive paste) according to the present invention is a conductive paste containing a curable compound, a curing agent, and a conductive filler. In the conductive paste (first conductive paste) according to the present invention, an exothermic onset temperature is 50°C or higher and 80°C or lower when the conductive paste is heated from 30°C to 200°C at a temperature increasing rate of 10°C/min and subjected to differential scanning calorimetry.

A conductive paste (second conductive paste) according to the present invention is a conductive paste containing a curable compound, a curing agent, and a conductive filler. In the conductive paste (second conductive paste) according to the present invention, the curing agent contains a secondary thiol curing agent or a primary thiol curing agent having no ester skeleton. In the conductive paste (second conductive paste) according to the present invention, the conductive filler is a conductive particle including a resin particle and a conductive layer disposed on a surface of the resin particle, or a metal particle having a melting point of higher than 450°C.

In a conventional conductive paste, when an electronic component is produced (mounted) in an air atmosphere using the conductive paste, a polymerization reaction of the conductive paste does not sufficiently proceed due to an influence of oxygen, and an uncured portion may exist in a cured product of the conductive paste. As a result, there is a problem in that the adhesiveness cannot be sufficiently enhanced and the conduction reliability of an electronic component

to be obtained cannot be sufficiently enhanced. This problem is more remarkable particularly when only a (meth)acrylate compound is radically polymerized as a curable compound, when mounting is performed at a relatively low temperature (for example, 160°C to 200°C), or when mounting is performed in a relatively short time (for example, within 15 seconds). With a conventional adhesive (conductive paste), it is difficult to enhance the curability of the adhesive (conductive paste) and enhance the storage stability.

The present inventors have found that the above problem can be solved by controlling the exothermic onset temperature when the conductive paste is subjected to differential scanning calorimetry within a specific range. The present inventors have found that the above problems can be solved by using a conductive paste having a specific composition.

That is, since the conductive paste according to the present invention has the above-described configuration, the pot life (pot life) can be prolonged (storage stability can be enhanced). Since the conductive paste according to the present invention has the above-described configuration, curability can be enhanced and sufficient curing can be performed even when mounting (heated) is performed in a relatively short time (for example, within 15 seconds). In particular, since the second conductive paste has the above-described configuration, the curability can be enhanced and the second conductive paste can be sufficiently cured even when mounting (heating) is performed at a relatively low temperature (for example, 160°C to 200°C) and in a relatively short time (for example, within 15 seconds). Since the conductive paste according to the present invention has the above-described configuration, even when mounting is performed in a relatively short time, adhesiveness can be enhanced, tackiness of a cured product can be improved, and conduction reliability can be enhanced.

The conductive paste is heated from 30°C to 200°C at a temperature increasing rate of 10°C/min, and subjected to differential scanning calorimetry (DSC). In the differential scanning calorimetry, the conductive paste (first conductive paste) according to the present invention has an exothermic onset temperature of 50°C or higher and 80°C or lower. In the differential scanning calorimetry, the second conductive paste preferably has an exothermic onset temperature of 50°C or higher and 80°C or lower. Note that, in the present specification, the exothermic onset temperature refers to a temperature at a portion where the calorific value starts to increase from the baseline. In the present specification, the exothermic end temperature refers to a temperature of a portion where the calorific value has decreased to 1% of the calorific value at the exothermic peak top after reaching the exothermic peak top.

The differential scanning calorimetry (DSC) can be performed by the following method. A differential scanning calorimeter is prepared. 5 mg of the conductive paste is placed in a dedicated aluminum pan, and the aluminum pan is covered with a lid using a dedicated jig. This dedicated aluminum pan and an empty aluminum pan (reference) are placed in a heating unit, and heated from 30°C to 200°C at a temperature increasing rate of 10°C/min in the air atmosphere to observe the reverse heat flow and the non-reverse heat flow. An exothermic peak observed in the non-reverse heat flow is defined as an exothermic peak of the conductive paste. Examples of the differential scanning calorimeter include "TA7000" manufactured by Hitachi High-Tech Science Corporation.

In the differential scanning calorimetry, the exothermic onset temperature can be measured. From the viewpoint of enhancing the storage stability and discharge stability of the conductive paste and further enhancing the conduction reliability even when mounting is performed in a relatively short time, the exothermic onset temperature is preferably 50°C or higher, more preferably 55°C or higher, and further preferably 60°C or higher, and is preferably 80°C or lower, more preferably 75°C or lower, and further preferably 70°C or lower.

In the differential scanning calorimetry, the exothermic peak top temperature can be measured. From the viewpoint of further enhancing the conduction reliability even when mounting is performed in a relatively short time, the exothermic peak top temperature is preferably 80°C or higher, more preferably 90°C or higher, and further preferably 100°C or higher, and is preferably 145°C or lower, more preferably 140°C or lower, and further preferably 130°C or lower.

In the differential scanning calorimetry, the exothermic end temperature can be measured. From the viewpoint of further enhancing the conduction reliability even when mounting is performed in a relatively short time, the exothermic end temperature is preferably 85°C or higher, more preferably 90°C or higher, further preferably 95°C or higher, and particularly preferably 100°C or higher, and is preferably 180°C or lower, more preferably 175°C or lower, and further preferably 170°C or lower.

In the differential scanning calorimetry, examples of the method of adjusting the exothermic onset temperature, the exothermic peak top temperature, and the exothermic end temperature to the preferable ranges include a method of increasing the content of the curing agent with respect to the content of the curable compound, and a method of adjusting the type and combination of the curing agents.

In the differential scanning calorimetry, an absolute value of a difference between the exothermic onset temperature and the exothermic end temperature is preferably 5°C or higher, more preferably 10°C or higher, further preferably 15°C or higher, and particularly preferably 20°C or higher, and is preferably 100°C or lower, more preferably 95°C or lower, further preferably 90°C or lower, particularly preferably 85°C or lower, and most preferably 80°C or lower. When the absolute value of the difference between the exothermic onset temperature and the exothermic end temperature is the above lower limit or more and the above upper limit or less, the storage stability of the conductive paste can be

enhanced, and the conduction reliability can be further enhanced even when mounting is performed in a relatively short time.

In the differential scanning calorimetry, the number of exothermic peaks is preferably one. In the differential scanning calorimetry, it is preferable that only one exothermic peak is observed. In the differential scanning calorimetry, it is preferable that two or more exothermic peaks are not observed.

The conductive paste according to the present invention is in the form of a paste at 25°C. The conductive paste is used by being discharged at, for example, 20°C to 50°C. The conductive paste according to the present invention is preferably used by being discharged by a jet dispenser.

The viscosity ($\eta$25) of the conductive paste at 25°C is preferably 15 Pa·s or more, more preferably 25 Pa·s or more, and further preferably 40 Pa·s or more, and is preferably 200 Pa·s or less, more preferably 150 Pa·s or less, and further preferably 100 Pa·s or less. When the viscosity ($\eta$25) is the above lower limit or more, the conductive paste can be suppressed from flowing out from the wiring. When the viscosity ($\eta$25) is the above upper limit or less, the conductive paste can be disposed on a fine wiring with high accuracy.

The viscosity ($\eta$25) can be measured, for example, using an E-type viscometer under the conditions of 25°C and 5 rpm for the conductive paste immediately after preparation. Examples of the E-type viscometer include "TV 35 type viscometer" manufactured by Toki Sangyo Co., Ltd.

The ratio of the viscosity ($\eta\alpha$) at 25°C after the conductive paste is stored at 25°C and 50% RH for 24 hours to the viscosity ($\eta$25) at 25°C of the conductive paste immediately after preparation is defined as a ratio (viscosity ($\eta\alpha$) after storage/viscosity ($\eta$25) immediately after preparation). The ratio (viscosity ($\eta\alpha$) after storage/viscosity ($\eta$25) immediately after preparation) is preferably 0.7 or more, more preferably 0.8 or more, and further preferably 0.9 or more, and is preferably 1.25 or less, more preferably less than 1.25, further preferably 1.2 or less, and particularly preferably 1.1 or less. When the ratio (viscosity ($\eta\alpha$) after storage/viscosity ($\eta$25) immediately after preparation) is the above lower limit or more, the storage stability can be further enhanced, and the conductive paste can be suppressed from flowing out from the wiring. When the ratio (viscosity ($\eta\alpha$) after storage/viscosity ($\eta$25) immediately after preparation) is the above upper limit or less or less than the above upper limit, the conductive paste can be disposed on a fine wiring with high accuracy.

The viscosity ($\eta\alpha$) after storage can be measured, for example, by storing the conductive paste in a thermo-hygrostat at 25°C and 50% RH for 24 hours and then using an E-type viscometer under the conditions of 25°C and 5 rpm. Examples of the E-type viscometer include "TV 35 type viscometer" manufactured by Toki Sangyo Co., Ltd.

The conductive paste has favorable adhesiveness. The conductive paste is suitably used as an adhesive. The conductive paste is particularly suitably used for adhesion between a substrate and a chip.

From the viewpoint of further enhancing the conduction reliability, the conductive paste is preferably an anisotropic conductive paste. The conductive paste is suitably used for electrical connection of electrodes. The conductive paste is suitably used for obtaining a connection structure. The conductive paste is suitably used for obtaining an electronic component. The conductive paste is particularly suitably used for obtaining an RFID inlay (use of the conductive paste for obtaining an RFID inlay). The conductive paste is suitably used for adhesion and connection between a chip having an electrode on a surface and a substrate having a wiring (antenna pattern) on a surface (use of the conductive paste for bonding and connecting a chip having an electrode on a surface and a substrate having a wiring (antenna pattern) on a surface).

Hereinafter, each component contained in the conductive paste will be described.

Note that, in the present specification, "(meth)acrylate" represents acrylate and methacrylate. "(Meth)acrylic" refers to acrylic and methacrylic.

<Curable compound>

Examples of the curable compound include a thermosetting compound and a photocurable compound. The curable compound is preferably a thermosetting compound. The thermosetting compound is a compound curable by heating. Examples of the thermosetting compound include a (meth)acrylic compound, an oxetane compound, an epoxy compound, an episulfide compound, a phenol compound, an amino compound, an unsaturated polyester compound, a polyurethane compound, a silicone compound, and a polyimide compound. Only one kind of the curable compound may be used, or two or more kinds thereof may be used in combination.

From the viewpoint of further enhancing the conduction reliability even when mounting is performed in a relatively short time, the curable compound preferably contains an epoxy compound.

Examples of the epoxy compound include a glycidylamine type epoxy compound, a bisphenol A type epoxy compound, a bisphenol F type epoxy compound, a bisphenol S type epoxy compound, a phenol novolac type epoxy compound, a biphenyl type epoxy compound, a biphenyl novolac type epoxy compound, a biphenol type epoxy compound, a naphthalene type epoxy compound, a fluorene type epoxy compound, a phenol aralkyl type epoxy compound, a naphthol aralkyl type epoxy compound, a dicyclopentadiene type epoxy compound, an anthracene type epoxy compound, an epoxy compound having an adamantane skeleton, an epoxy compound having a tricyclodecane

skeleton, a naphthylene ether type epoxy compound, and an epoxy compound having a triazine nucleus in the skeleton.

From the viewpoint of further enhancing the conduction reliability even when mounting is performed in a relatively short time, the curable compound more preferably contains a bisphenol A type epoxy compound, a bisphenol F type epoxy compound, or a glycidylamine-type epoxy compound, and further preferably contains a glycidylamine-type epoxy compound. In particular, In the first conductive paste, from the viewpoint of further enhancing the conduction reliability even when mounting is performed in a relatively short time, the curable compound further preferably contains a glycidylamine-type epoxy compound.

In particular, in the second conductive paste, from the viewpoint of further enhancing the curability and the storage stability even when mounting (heating) is performed at a relatively low temperature and in a relatively short time, the curable compound further preferably contains a bisphenol A type epoxy compound or a bisphenol F type epoxy compound. In this case, the curable compound may contain at least one of a bisphenol A type epoxy compound and a bisphenol F type epoxy compound, and may contain both.

The molecular weight of the curable compound is preferably 350 or more, more preferably 400 or more, further preferably 450 or more, and particularly preferably 500 or more, and is preferably 4500 or less, more preferably 4000 or less, further preferably 3500 or less, and particularly preferably 3000 or less. When the molecular weight of the curable compound is within the above range, the viscosity of the conductive paste can be adjusted to a suitable range, and the conduction reliability can be further enhanced.

When the structural formula of the curable compound can be specified, the molecular weight of the curable compound means a molecular weight that can be calculated from the structural formula. When the structural formula of the curable compound cannot be specified, the molecular weight means a weight average molecular weight. The weight average molecular weight refers to a weight average molecular weight in terms of polystyrene measured by gel permeation chromatography (GPC). Since the curable compound has a relatively small molecular weight, the structural formula can be generally specified. The weight average molecular weight can be measured by the following measurement apparatus and measurement conditions.

Measuring apparatus: "Waters GPC System (Waters 2690 + Waters 2414 (RI))" manufactured by Nihon Waters K.K.

Column: Shodex GPC LF-G × 1, Shodex GPC LF-804 × 2
Mobile phase: THF 1.0 mL/min
Sample concentration: 5 mg/mL
Detector: differential refractive index detector (RID)
Standard substance: polystyrene (manufactured by Tosoh Corporation, weight average molecular weight: 620 to 590000)

The content of the curable compound in 100 wt% of the conductive paste is preferably 15 wt% or more and more preferably 20 wt% or more, and is preferably 90 wt% or less, more preferably 80 wt% or less, and further preferably 70 wt% or less. When the content of the curable compound is the above lower limit or more and the above upper limit or less, curability can be further enhanced, adhesiveness can be further enhanced, tackiness of a cured product can be further improved, and conduction reliability can be further enhanced even when mounting is performed in a relatively short time. Note that, when the curable compound contains two or more kinds of curable compounds, the content of the curable compound refers to the total content of the two or more kinds of curable compounds.

The content of the epoxy compound in 100 wt% of the conductive paste is preferably 15 wt% or more and more preferably 20 wt% or more, and is preferably 90 wt% or less, more preferably 80 wt% or less, and further preferably 70 wt% or less. When the content of the epoxy compound is the above lower limit or more and the above upper limit or less, curability can be further enhanced, adhesiveness can be further enhanced, tackiness of a cured product can be further improved, and conduction reliability can be further enhanced even when mounting is performed in a relatively short time.

The content of the glycidylamine-type epoxy compound in 100 wt% of the conductive paste is preferably 15 wt% or more and more preferably 20 wt% or more, and is preferably 90 wt% or less, more preferably 80 wt% or less, and further preferably 70 wt% or less. When the content of the glycidylamine-type epoxy compound is the above lower limit or more and the above upper limit or less, curability can be further enhanced, adhesiveness can be further enhanced, tackiness of a cured product can be further improved, and conduction reliability can be further enhanced even when mounting is performed in a relatively short time.

The total content of the bisphenol A type epoxy compound and the bisphenol F type epoxy compound in 100 wt% of the conductive paste is preferably 15 wt% or more, more preferably 20 wt% or more, and preferably 90 wt% or less, more preferably 80 wt% or less, and further preferably 70 wt% or less. When the total content of the bisphenol A type epoxy compound and the bisphenol F type epoxy compound is the above lower limit or more and the above upper limit or less, curability can be further enhanced even when mounting (heating) is performed at a relatively low temperature and in a relatively short time. Even when mounting is performed in a relatively short time, the adhesiveness can be further

enhanced, the tackiness of a cured product can be further improved, and the conduction reliability can be further enhanced. When the curable compound contains only one of the bisphenol A type epoxy compound and the bisphenol F type epoxy compound, the total content of the bisphenol A type epoxy compound and the bisphenol F type epoxy compound means the content of one compound. When the curable compound contains both the bisphenol A type epoxy compound and the bisphenol F type epoxy compound, the total content of the bisphenol A type epoxy compound and the bisphenol F type epoxy compound means the total content of both compounds.

<Curing agent>

The curing agent is not particularly limited. As the curing agent, a curing agent capable of curing the curable compound can be appropriately used. The curing agent may contain a curing accelerator.

Examples of the curing agent include a phenol compound (phenol curing agent), an active ester compound, a carbodiimide compound (carbodiimide curing agent), an amine compound (amine curing agent), a thiol compound (thiol curing agent), a phosphine compound, dicyandiamide, and an acid anhydride. The curing agent preferably has a functional group capable of reacting with the epoxy group of the epoxy compound. Only one kind of the curing agent may be used, or two or more kinds thereof may be used in combination.

From the viewpoint of further enhancing the curability even when mounting is performed in a relatively short time, the curing agent preferably contains a thiol compound (thiol curing agent) or an amine compound (amine curing agent), more preferably contains a thiol compound (thiol curing agent), and further preferably contains a thiol compound (thiol curing agent) and an amine compound (amine curing agent).

The thiol compound (thiol curing agent) may be a primary thiol compound (primary thiol curing agent) or a secondary thiol compound (secondary thiol curing agent).

In the second conductive paste, the curing agent contains a secondary thiol curing agent or a primary thiol curing agent having no ester skeleton. In this case, the curing agent may contain at least one of a secondary thiol curing agent and a primary thiol curing agent having no ester skeleton, and may contain both of them.

The "secondary thiol" means a compound having a structure having one side chain at a carbon atom to which an SH group is bonded. The "primary thiol" means a compound having no side chain at the carbon atom to which an SH group is bonded.

In the first conductive paste, the curing agent preferably contains a secondary thiol curing agent or a primary thiol curing agent having no ester skeleton.

In the first conductive paste and the second conductive paste, the curing agent may contain a primary thiol curing agent having no ester skeleton or may contain a secondary thiol curing agent. The secondary thiol curing agent may have an ester skeleton or may not have an ester skeleton. That is, in the second conductive paste, the curing agent may contain a primary thiol curing agent having no ester skeleton, a secondary thiol curing agent having an ester skeleton, or a secondary thiol curing agent having no ester skeleton.

Examples of the primary thiol compound (primary thiol curing agent) include stearyl-3-mercaptopropionate, 2-ethyl-2-{[(3-sulfanylpropanoyl)oxy]methyl}propane-1,3-diyl=bis(3-sulfanylpropanoate, methoxybutyl-β-mercaptopropionate, and 2-{2,4,6-trioxo-3,5-bis[2-(3-sulfanylpropanoyloxy)ethyl]-1,3,5-triazinane-1-yl}ethyl=3-sulfanylpropionate.

Examples of the primary thiol compound having no ester skeleton (primary thiol curing agent having no ester skeleton) include tetrahydro-1,3,4,6-tetrakis(3-mercaptopropyl)-imidazo[4,5-d]imidazole-2,5(1H,3H)-dione, tetrahydro-1,3,4,6-tetrakis(3-mercaptoethyl)-imidazo[4,5-d]imidazole-2,5(1H,3H)-dione, 3-(3-mercapto-propoxy)-2,2-bis-(3-mercapto-propoxymethyl)-propane-1-ol, and 3-{3-(3-mercapto-propoxy)-2,2-bis-[(3-mercaptopropoxy)methyl]propoxy}-propane-1-ol.

Examples of the secondary thiol compound (secondary thiol curing agent) include pentaerythritol tetrakis(3-mercaptobutyrate), 1,4-bis(3-mercaptobutyryloxy)butane, 1,3,5-tris(2-(3-sulfanylbutanoyloxy)ethyl)-1,3,5-triazinane-2,4,6-trione, and trimethylolpropane tris(3-mercaptobutyrate) .

From the viewpoint of further enhancing the curability even when mounting is performed in a relatively short time, the thiol compound (thiol curing agent) is preferably a secondary thiol compound (secondary thiol curing agent). From the viewpoint of further enhancing the curability even when mounting is performed in a relatively short time, the curing agent preferably contains a secondary thiol compound (secondary thiol curing agent).

From the viewpoint of further enhancing the curability even when mounting (heating) is performed at a relatively low temperature and in a relatively short time, the conductive paste preferably contains a thiol curing agent having no ester skeleton. From the viewpoint of further enhancing the curability even when mounting (heating) is performed at a relatively low temperature and in a relatively short time, the conductive paste preferably contains a primary thiol curing agent having no ester skeleton or a secondary thiol curing agent having no ester skeleton.

From the viewpoint of further enhancing the curability even when mounting (heating) is performed at a relatively low temperature and in a relatively short time, the conductive paste preferably contains a thiol curing agent having two or more thiol groups. From the viewpoint of further enhancing the curability even when mounting (heating) is performed at a

relatively low temperature and in a relatively short time, the number of thiol groups in the thiol curing agent is preferably 2 or more, more preferably 3 or more, and further preferably 4 or more. The number of thiol groups in the thiol curing agent may be 10 or less or 6 or less. The range of the number of thiol groups in the thiol curing agent can be set by appropriately selecting the above lower limit value and the above upper limit value.

From the viewpoint of further enhancing the curability even when mounting (heating) is performed at a relatively low temperature and in a relatively short time, the conductive paste particularly preferably contains a thiol curing agent having two or more thiol groups and having no ester skeleton.

From the viewpoint of further enhancing the curability even when mounting (heating) is performed at a relatively low temperature and in a relatively short time, the conductive paste particularly preferably contains a thiol curing agent having a structure represented by the following Formula (1).

[Chemical 2]

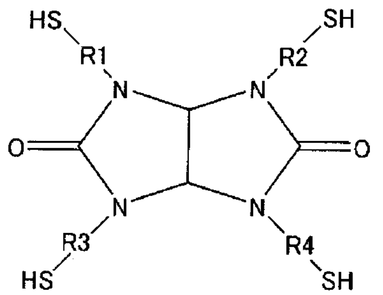

···(1)

In the above Formula (1), R1, R2, R3, and R4 each represent an alkylene group having 1 to 5 carbon atoms.

In the above Formula (1), the number of carbon atoms of the alkylene group of R1, R2, R3, and R4 may be 2 or more.

The thiol curing agent having a structure represented by the above Formula (1) is a thiol curing agent having two or more thiol groups and having no ester skeleton.

In the above Formula (1), R1, R2, R3, and R4 may be the same or different.

From the viewpoint of further enhancing the curability even when mounting (heating) is performed at a relatively low temperature and in a relatively short time, R1, R2, R3, and R4 in the above Formula (1) are each preferably an alkylene group having 2 or 3 carbon atoms. From the viewpoint of further enhancing the curability even when mounting (heating) is performed at a relatively low temperature and in a relatively short time, the number of carbon atoms of the alkylene group of R1, R2, R3, and R4 in the above Formula (1) is preferably 2 or 3.

The curing agent preferably contains tetrahydro-1,3,4,6-tetrakis(3-mercaptopropyl)-imidazo[4,5-d]imidazole-2,5(1H,3H)-dione, or tetrahydro-1,3,4,6-tetrakis(3-mercaptoethyl)-imidazo[4,5-d]imidazole-2,5(1H,3H)-dione. In this case, the curability can be further enhanced even when mounting (heating) is performed at a relatively low temperature and in a relatively short time. The curing agent more preferably contains tetrahydro-1,3,4,6-tetrakis(3-mercaptopropyl)-imidazo[4,5-d]imidazole-2,5(1H,3H)-dione. In this case, the curability can be further enhanced even when mounting (heating) is performed at a relatively low temperature and in a relatively short time.

Examples of the amine compound (amine curing agent) include a dihydrazide compound, diethylamine, triethylamine, diethylenetetramine, triethylenetetramine, and 4,4-dimethylaminopyridine. The amine compound (amine curing agent) may be an amine adduct-based curing agent.

The amine compound (amine curing agent) is preferably a solid at 25°C. The curing agent preferably contains an amine compound (amine curing agent) that is a solid at 25°C.

The melting point of the amine compound (amine curing agent) that is a solid at 25°C is preferably 50°C or higher, more preferably 55°C or higher, and further preferably 60°C or higher, and is preferably 180°C or lower, more preferably 175°C or lower, and further preferably 170°C or lower. When the melting point is the above lower limit or more and the above upper limit or less, the curability can be further enhanced and the tackiness of a cured product can be further improved even when mounting is performed in a relatively short time.

The melting point of the amine compound (amine curing agent) that is a solid at 25°C can be calculated, for example, from an endothermic peak by performing differential scanning calorimetry (DSC).

The curing agent preferably contains a secondary thiol compound (secondary thiol curing agent) and an amine compound (amine curing agent) that is a solid at 25°C.

From the viewpoint of further enhancing the storage stability, the curing agent preferably contains a microcapsule-type curing agent.

As the microcapsule-type curing agent, a commercially available product may be used. Examples of commercially available products of the microcapsule-type curing agent include NOVACURE HX3088, NOVACURE HX3941, NOVACURE HXA4922HP, NOVACURE HX3742, NOVACURE HX3722, and NOVACURE HXA9042HP (all manufactured by Asahi Kasei E-materials Inc.).

From the viewpoint of further enhancing the storage stability, the curing agent particularly preferably contains a secondary thiol curing agent or a primary thiol curing agent having no ester skeleton, and the microcapsule-type curing agent.

The content of the curing agent in 100 wt% of the conductive paste is preferably 5 wt% or more, more preferably 10 wt% or more, and further preferably 15 wt% or more, and preferably 50 wt% or less, more preferably 45 wt% or less, and further preferably 40 wt% or less. When the content of the curing agent is the above lower limit or more and the above upper limit or less, curability can be further enhanced, adhesiveness can be further enhanced, tackiness of a cured product can be further improved, and conduction reliability can be further enhanced even when mounting is performed in a relatively short time. When the curing agent contains two or more curing agents, the content of the curing agent indicates the total content of the two or more curing agents. (The same applies hereinafter)

The content of the curing agent is preferably 40 parts by weight or more and more preferably 50 parts by weight or more, and is preferably 90 parts by weight or less and more preferably 80 parts by weight or less with respect to 100 parts by weight of the content of the curable compound. When the content of the curing agent is the above lower limit or more and the above upper limit or less, curability can be further enhanced, adhesiveness can be further enhanced, tackiness of a cured product can be further improved, and conduction reliability can be further enhanced even when mounting is performed in a relatively short time.

The content of the secondary thiol curing agent in 100 wt% of the conductive paste is preferably 5 wt% or more, more preferably 10 wt% or more, and further preferably 15 wt% or more, and preferably 50 wt% or less, more preferably 45 wt% or less, and further preferably 40 wt% or less. When the content of the secondary thiol curing agent is the above lower limit or more and the above upper limit or less, curability can be further enhanced, adhesiveness can be further enhanced, tackiness of a cured product can be further improved, and conduction reliability can be further enhanced even when mounting is performed in a relatively short time.

The total content of the secondary thiol curing agent and the amine curing agent that is a solid at 25°C in 100 wt% of the conductive paste is preferably 7 wt% or more, more preferably 10 wt% or more, and further preferably 15 wt% or more, and is preferably 50 wt% or less, more preferably 45 wt% or less, and further preferably 40 wt% or less. When the total content of the secondary thiol curing agent and the amine curing agent that is a solid at 25°C is the above lower limit or more and the above upper limit or less, curability can be further enhanced, adhesiveness can be further enhanced, tackiness of a cured product can be further improved, and conduction reliability can be further enhanced even when mounting is performed in a relatively short time.

The total content of the secondary thiol curing agent and the amine curing agent that is a solid at 25°C is preferably 40 parts by weight or more and more preferably 50 parts by weight or more, and is preferably 90 parts by weight or less and more preferably 80 parts by weight or less with respect to 100 parts by weight of the content of the curable compound. When the total content of the secondary thiol curing agent and the amine curing agent that is a solid at 25°C is the above lower limit or more and the above upper limit or less, curability can be further enhanced, adhesiveness can be further enhanced, tackiness of a cured product can be further improved, and conduction reliability can be further enhanced even when mounting is performed in a relatively short time.

The total content of the secondary thiol curing agent and the primary thiol curing agent having no ester skeleton in 100 wt% of the conductive paste is preferably 5 wt% or more, more preferably 10 wt% or more, and further preferably 15 wt% or more, and is preferably 50 wt% or less, more preferably 45 wt% or less, and further preferably 40 wt% or less. When the total content of the secondary thiol curing agent and the primary thiol curing agent having no ester skeleton is the above lower limit or more and the above upper limit or less, curability can be further enhanced even when mounting (heating) is performed at a relatively low temperature in a relatively short time. When the total content of the secondary thiol curing agent and the primary thiol curing agent having no ester skeleton is the above lower limit or more and the above upper limit or less, the adhesiveness can be further enhanced, the tackiness of a cured product can be further improved, and the conduction reliability can be further enhanced. When the curing agent contains only one of the secondary thiol curing agent and the primary thiol curing agent having no ester skeleton, the total content of the secondary thiol curing agent and the primary thiol curing agent having no ester skeleton indicates the content of one curing agent. When the curing agent contains both the secondary thiol curing agent and the primary thiol curing agent having no ester skeleton, the total content of the secondary thiol curing agent and the primary thiol curing agent having no ester skeleton indicates the total content of both curing agents.

The content of the microcapsule-type curing agent in 100 wt% of the conductive paste is preferably 5 wt% or more, more preferably 10 wt% or more, and further preferably 15 wt% or more, and preferably 50 wt% or less, more preferably 45 wt% or less, and further preferably 40 wt% or less. When the content of the microcapsule-type curing agent is the above lower limit or more and the above upper limit or less, the storage stability can be further enhanced.

<Conductive filler>

The conductive filler is not particularly limited. The conductive filler may be conductive particles or carbon fibers.

From the viewpoint of further enhancing the conduction reliability, in the first conductive paste, the conductive filler is preferably conductive particles including resin particles and a conductive layer disposed on the surface of the resin particles, or metal particles having a melting point of higher than 450°C. In the second conductive paste, the conductive filler is a conductive particle including a resin particle and a conductive layer disposed on a surface of the resin particle, or a metal particle having a melting point of higher than 450°C. In the second conductive paste, the conductive filler may be a conductive particle including a resin particle and a conductive layer disposed on the surface of the resin particle, or may be a metal particle having a melting point of higher than 450°C. In a conductive particle including a resin particle and a conductive layer disposed on a surface of the resin particle, the resin particle is a base particle. From the viewpoint of further enhancing the conduction reliability, in the first conductive paste, the conductive filler is preferably metal particles having a melting point of higher than 450°C. From the viewpoint of further enhancing the conduction reliability, in the second conductive paste, the conductive filler is preferably metal particles having a melting point of higher than 450°C.

The conductive filler in the second conductive paste is different from solder particles. Since the second conductive paste has the above configuration, the discharge stability of the conductive paste can be enhanced. When only metal particles having a melting point of 450°C or less (for example, solder particles) are used as the conductive filler, it is difficult to sufficiently enhance the discharge stability of the conductive paste as compared with the case of using metal particles having a melting point of higher than 450°C.

In the conductive paste (particularly, the first conductive paste), the shape of the conductive filler is not particularly limited. The shape of the conductive filler may be a spherical shape, a shape other than a spherical shape, a flat shape, or the like.

In the conductive paste (particularly, the first conductive paste), the conductive filler is preferably conductive particles. The conductive particles may be solder particles or metal particles. The metal particles may be metal powder. The conductive particle may include a base particle and a conductive portion disposed on a surface of the base particle. From the viewpoint of further enhancing the conduction reliability, the conductive particle preferably includes a base particle and a conductive portion disposed on the surface of the base particle.

In the conductive paste (particularly, the first conductive paste), when the conductive filler is conductive particles, the particle size of the conductive particles is preferably 0.1 μm or more, more preferably 1 μm or more, and further preferably 2 μm or more, and is preferably 100 μm or less, more preferably 30 μm or less, and further preferably 10 μm or less. When the particle size of the conductive particles is the above lower limit or more and the above upper limit or less, the conduction reliability can be further enhanced even when mounting is performed in a relatively short time.

In the conductive paste, the particle size of the conductive filler is preferably 0.1 μm or more, more preferably 1 μm or more, and further preferably 2 μm or more, and is preferably 100 μm or less, more preferably 30 μm or less, and further preferably 10 μm or less. When the particle size of the conductive particles is the above lower limit or more and the above upper limit or less, the conduction reliability can be further enhanced even when mounting is performed in a relatively short time.

The particle sizes of the conductive particles and the conductive filler are preferably an average particle size, and more preferably a number average particle size. The average particle sizes of the conductive particles and the conductive filler are determined, for example, by observing 50 arbitrary conductive particles and conductive fillers with an electron microscope or an optical microscope, and calculating the average value of the particle sizes of the respective conductive particles and conductive fillers or performing laser diffraction type particle size distribution measurement.

In the conductive particles, when the particle size of the conductive particles is measured by a method of observing 50 arbitrary conductive particles with an electron microscope or an optical microscope, for example, the particle size can be measured as follows. An embedded resin body for inspection of conductive particles is prepared by adding and dispersing the conductive particles in "Technovit 4000" manufactured by Kulzer GmbH so that the content of the conductive particles is 30 wt%. Using an ion milling apparatus ("IM4000" manufactured by Hitachi High-Technologies Corporation), a cross section of the conductive particles is cut out so as to pass near the center of the conductive particles dispersed in the embedded resin body for inspection of conductive particles. Then, using a field emission scanning electron microscope (FE-SEM), the image magnification is set to 25000 times, 50 conductive particles are randomly selected, and each conductive particle is observed. The equivalent circle diameter of each conductive particle is measured, and the arithmetic average thereof is taken as the particle size of the conductive particle. The same applies to the case of the conductive filler.

The coefficient of variation (CV value) of the particle size of the conductive particles is preferably 10% or less and more preferably 5% or less. When the coefficient of variation of the particle size of the conductive particles is the above upper limit or less, the conduction reliability can be further enhanced. The lower limit of the coefficient of variation (CV value) of the particle size of the conductive particles is not particularly limited. The coefficient of variation (CV value) of the particle size of the conductive particles may be 0% or more or 1% or more.

The coefficient of variation (CV value) can be measured as follows.

$$\text{CV value (\%)} = (\rho/Dn) \times 100$$

ρ: standard deviation of particle size of conductive particles
Dn: average value of particle sizes of conductive particles

The content of the conductive filler in 100 wt% of the conductive paste is preferably 0.1 wt% or more, more preferably 1 wt% or more, and further preferably 5 wt% or more, and is preferably 80 wt% or less, more preferably 60 wt% or less, and further preferably 50 wt% or less. When the content of the conductive filler is the above lower limit or more and the above upper limit or less, the conduction reliability can be further enhanced even when mounting is performed in a relatively short time.
The content of the conductive filler is preferably 2 parts by weight or more, more preferably 3 parts by weight or more, further preferably 5 parts by weight or more, and particularly preferably 7 parts by weight or more with respect to 100 parts by weight of the content of the curable compound. The content of the conductive filler is preferably 35 parts by weight or less, more preferably 30 parts by weight or less, further preferably 25 parts by weight or less, and particularly preferably 20 parts by weight or less with respect to 100 parts by weight of the content of the curable compound. When the content of the conductive filler is the above lower limit or more and the above upper limit or less, the conduction reliability can be further enhanced even when mounting is performed in a relatively short time.
The conductive filler preferably contains a metal. Examples of the metal include gold, silver, copper, platinum, palladium, zinc, lead, aluminum, cobalt, indium, ruthenium, nickel, chromium, titanium, antimony, bismuth, germanium, cadmium, and alloys thereof. Tin-doped indium oxide (ITO) may be used as the metal. Only one kind of the metal may be used, or two or more kinds thereof may be used in combination.
From the viewpoint of further lowering the connection resistance between the electrodes, the conductive filler preferably contains an alloy containing tin, nickel, palladium, ruthenium, silver, copper, or gold, and more preferably contains nickel or palladium. From the viewpoint of enhancing the corrosion resistance of the conductive filler and maintaining high conduction reliability, the conductive filler preferably contains nickel or gold, and more preferably contains nickel. From the viewpoint of enhancing the corrosion resistance of the conductive filler and maintaining high conduction reliability, the conductive filler particularly preferably contains nickel on the outer surface.
When the conductive particles are metal particles, examples of the metal as a material of the metal particles include silver, copper, nickel, silicon, gold, titanium, and alloys such as solder. From the viewpoint of more effectively enhancing the conduction reliability, the material of the metal particles preferably contains nickel or a nickel alloy, and the material of the metal particles is more preferably nickel or a nickel alloy. From the viewpoint of more effectively enhancing the conduction reliability, the outer surface portion of the metal particles preferably contains nickel or a nickel alloy.
Hereinafter, details of the conductive particle including the base particle and the conductive portion disposed on the surface of the base particle will be described.

(Base particle)

Examples of the base particle include a resin particle, an inorganic particle excluding a metal particle, an organic-inorganic hybrid particle, and a metal particle. The base particle is preferably a base particle excluding a metal particle, and more preferably a resin particle, an inorganic particle excluding a metal particle, or an organic-inorganic hybrid particle. The base particle may be a core-shell particle including a core and a shell disposed on a surface of the core. The core may be an organic core, and the shell may be an inorganic shell.
The base particle is more preferably a resin particle or an organic-inorganic hybrid particle, and may be a resin particle or an organic-inorganic hybrid particle. By using these preferable base particles, the effect of the present invention is more effectively exhibited.
As the material of the resin particles, various resins are suitably used. Examples of the material of the resin particles include polyolefin resins such as polyethylene, polypropylene, polystyrene, polyvinyl chloride, polyvinylidene chloride, polyisobutylene, and polybutadiene; acrylic resins such as polymethyl methacrylate and polymethyl acrylate; polyalkylene terephthalate, polycarbonate, polyamide, a phenol formaldehyde resin, a melamine formaldehyde resin, a benzoguanamine formaldehyde resin, a urea formaldehyde resin, a phenol resin, a melamine resin, a benzoguanamine resin, a urea resin, an epoxy resin, an unsaturated polyester resin, a saturated polyester resin, polysulfone, polyphenylene oxide, polyacetal, polyimide, polyamide imide, polyether ether ketone, polyether sulfone, a divinylbenzene polymer, and a polymer obtained by polymerizing one or two or more of various polymerizable monomers having an ethylenically unsaturated group. The divinylbenzene polymer may be a divinylbenzene-based copolymer. Examples of the divinylbenzene-based copolymer include a divinylbenzene-styrene copolymer and a divinylbenzene-(meth)acrylic acid ester copolymer.

Since resin particles having arbitrary compression characteristics suitable for the conductive paste can be designed and synthesized, and the hardness of the resin particles can be easily controlled within a suitable range, the material of the resin particles is preferably a polymer obtained by polymerizing one or more polymerizable monomers having a plurality of ethylenically unsaturated groups.

When the resin particles are obtained by polymerizing a polymerizable monomer having an ethylenically unsaturated group, examples of the polymerizable monomer having an ethylenically unsaturated group include a non-crosslinkable monomer and a crosslinkable monomer.

Examples of the non-crosslinkable monomer include styrene monomers such as styrene and α-methylstyrene; carboxyl group-containing monomers such as (meth)acrylic acid, maleic acid, and maleic anhydride; alkyl (meth)acrylate compounds such as methyl (meth)acrylate, ethyl (meth)acrylate, propyl (meth)acrylate, butyl (meth)acrylate, 2-ethylhexyl (meth)acrylate, lauryl (meth)acrylate, cetyl (meth)acrylate, stearyl (meth)acrylate, cyclohexyl (meth)acrylate, and isobornyl (meth)acrylate; oxygen atom-containing (meth)acrylate compounds such as 2-hydroxyethyl (meth)acrylate, glycerol (meth)acrylate, polyoxyethylene (meth)acrylate, and glycidyl (meth)acrylate; nitrile-containing monomers such as (meth)acrylonitrile; acid vinyl ester compounds such as vinyl acetate, vinyl butyrate, vinyl laurate, and vinyl stearate; unsaturated hydrocarbons such as ethylene, propylene, isoprene, and butadiene; and halogen-containing monomers such as trifluoromethyl (meth)acrylate, pentafluoroethyl (meth)acrylate, vinyl chloride, vinyl fluoride, and chlorostyrene.

Examples of the crosslinkable monomer include polyfunctional (meth)acrylate compounds such as tetramethylolmethane tetra(meth)acrylate, tetramethylolmethane tri(meth)acrylate, tetramethylolmethane di(meth)acrylate, trimethylolpropane tri(meth)acrylate, dipentaerythritol hexa(meth)acrylate, dipentaerythritol penta(meth)acrylate, glycerol tri(meth)acrylate, glycerol di(meth)acrylate, (poly)ethylene glycol di(meth)acrylate, (poly)propylene glycol di(meth)acrylate, (poly)tetramethylene glycol di(meth)acrylate, and 1,4-butanediol di(meth)acrylate; and silane-containing monomers such as triallyl (iso)cyanurate, triallyl trimellitate, divinylbenzene, diallyl phthalate, diallyl acrylamide, diallyl ether, γ-(meth)acryloxypropyltrimethoxysilane, trimethoxysilylstyrene, and vinyltrimethoxysilane.

The resin particles can be obtained by polymerizing a polymerizable monomer having an ethylenically unsaturated group by a known method. Examples of the method include a method of performing suspension polymerization in the presence of a radical polymerization initiator, and a method of swelling a monomer together with a radical polymerization initiator using non-crosslinked seed particles to perform polymerization.

When the base particle is an inorganic particle or an organic-inorganic hybrid particle excluding a metal particle, examples of the inorganic substance as a material of the base particle include silica, alumina, barium titanate, zirconia, and carbon black. The inorganic substance is preferably not a metal. The particles formed of silica are not particularly limited, and examples thereof include particles obtained by hydrolyzing a silicon compound having two or more hydrolyzable alkoxysilyl groups to form crosslinked polymer particles, and then performing firing as necessary. Examples of the organic-inorganic hybrid particles include organic-inorganic hybrid particles formed of a crosslinked alkoxysilyl polymer and an acrylic resin.

The organic-inorganic hybrid particle is preferably a core-shell type organic-inorganic hybrid particle having a core and a shell disposed on a surface of the core. The core is preferably an organic core. The shell is preferably an inorganic shell. From the viewpoint of more effectively lowering the connection resistance between the electrodes, the base particle is preferably an organic-inorganic hybrid particle having an organic core and an inorganic shell disposed on a surface of the organic core.

Examples of the material of the organic core include the material of the resin particles described above.

Examples of the material of the inorganic shell include the inorganic substances exemplified as the material of the base particle described above. The material of the inorganic shell is preferably silica. The inorganic shell is preferably formed on the surface of the core by forming a metal alkoxide into a shell-like material by a sol-gel method and then firing the shell-like material. The metal alkoxide is preferably a silane alkoxide. The inorganic shell is preferably formed of silane alkoxide.

When the base particles are metal particles, examples of the metal as a material of the metal particles include silver, copper, nickel, silicon, gold, titanium, and alloys such as solder.

The melting point of the metal particles is preferably higher than 450°C, more preferably 500°C or higher, still more preferably 600°C or higher, further preferably 700°C or higher, even further preferably 800°C or higher, and particularly preferably 900°C or higher. When the melting point of the metal particles is the above lower limit or more, the discharge stability of the conductive paste can be further enhanced. The melting point of the metal particles may be 3000°C or lower, or may be 2500°C or lower. The range of the melting point of the metal particles can be set by appropriately selecting the above lower limit value and the above upper limit value.

The particle size of the base particles is preferably 0.01 μm or more, more preferably 0.05 μm or more, still more preferably 0.5 μm or more, further preferably 1 μm or more, and particularly preferably 3 μm or more, and is preferably 50 μm or less, more preferably 30 μm or less, further preferably 20 μm or less, and particularly preferably 10 μm or less. When

the particle size of the base particles is the above lower limit or more, the conduction reliability is further enhanced. When the conductive portion is formed on the surface of the base particle, the conductive portion is hardly aggregated, and aggregated conductive particles are hardly formed. When the particle size of the base particles is the above upper limit or less, the conductive particles are easily sufficiently compressed, and the connection resistance between the electrodes connected via the conductive particles can be further effectively reduced.

The particle size of the base particles is preferably an average particle size, and more preferably a number average particle size. The number average particle size of the base particles can be measured, for example, as follows. An embedded resin body for inspection of base particles is prepared by adding and dispersing the conductive particles in "Technovit 4000" manufactured by Kulzer GmbH so that the content of the conductive particles is 30 wt%. Using an ion milling apparatus ("IM4000" manufactured by Hitachi High-Technologies Corporation), a cross section of the conductive particles is cut out so as to pass near the center of the base particles in the conductive particles dispersed in the embedded resin body for inspection of base particles. Then, using a field emission scanning electron microscope (FE-SEM), the image magnification is set to 25000 times, 50 conductive particles are randomly selected, and the base particle of each conductive particle is observed. The particle size of the base particle in each conductive particle is measured, and the arithmetic average thereof is taken as the average particle size of the base particles.

(Conductive portion)

The conductive portion preferably contains a metal. The metal constituting the conductive portion is not particularly limited. Examples of the metal include gold, silver, copper, platinum, palladium, zinc, lead, aluminum, cobalt, indium, ruthenium, nickel, chromium, titanium, antimony, bismuth, germanium, cadmium, and alloys thereof. Tin-doped indium oxide (ITO) may be used as the metal. Only one kind of the metal may be used, or two or more kinds thereof may be used in combination. From the viewpoint of further lowering the connection resistance between the electrodes, an alloy containing tin, nickel, palladium, ruthenium, silver, copper, or gold is preferable, and nickel or palladium is more preferable.

From the viewpoint of more effectively enhancing the conduction reliability, it is preferable that the conductive portion contains nickel, and it is more preferable that the outer surface portion of the conductive portion contains nickel.

The content of nickel in 100 wt% of the conductive portion containing nickel is preferably 10 wt% or more, more preferably 50 wt% or more, still more preferably 60 wt% or more, further preferably 70 wt% or more, and particularly preferably 90 wt% or more. The content of nickel in 100 wt% of the conductive portion containing nickel may be 99 wt% or less, 90 wt% or less, or 70 wt% or less.

The conductive portion may be formed of one layer. The conductive portion may be formed of a plurality of layers. That is, the conductive portion may have a laminated structure of two or more layers. When the conductive portion is formed of a plurality of layers, the metal constituting the outermost layer is preferably gold, silver, nickel, palladium, ruthenium, copper, or an alloy containing tin, and more preferably nickel. When the metal constituting the outermost layer is one of these preferable metals, the connection resistance between the electrodes is further lowered.

The method for forming the conductive portion on the surface of the base particle is not particularly limited. Examples of the method for forming the conductive portion include a method by electroless plating, a method by electroplating, a method by physical collision, a method by mechanochemical reaction, a method by physical vapor deposition or physical adsorption, and a method of coating a metal powder or a paste containing a metal powder and a binder on the surface of a base particle. The method for forming the conductive portion is preferably electroless plating, electroplating, or a method by physical collision. Examples of the method by physical vapor deposition include methods such as vacuum vapor deposition, ion plating, and ion sputtering. In the method by physical collision, for example, Theta Composer (manufactured by TOKUJU CORPORATION) or the like is used.

The thickness of the conductive portion is preferably 0.005 μm or more and more preferably 0.01 μm or more, and is preferably 10 μm or less, more preferably 1 μm or less, and further preferably 0.3 μm or less. When the thickness of the conductive portion is the above lower limit or more and the above upper limit or less, sufficient conductivity is obtained, and the conductive particles are not excessively hard, and the conductive particles can be sufficiently deformed at the time of connection.

When the conductive portion is formed of a plurality of layers, the thickness of the conductive portion of the outermost layer is preferably 0.001 μm or more and more preferably 0.01 μm or more, and is preferably 0.5 μm or less and more preferably 0.1 μm or less. When the thickness of the conductive portion of the outermost layer is the above lower limit or more and the above upper limit or less, the conductive portion of the outermost layer becomes uniform, corrosion resistance becomes sufficiently high, and connection resistance between the electrodes can be sufficiently lowered.

The thickness of the conductive portion can be measured, for example, by observing a cross section of the conductive particles using a transmission electron microscope (TEM).

Core substance:

The conductive particle preferably has a plurality of protrusions on the outer surface of the conductive portion. Oxide films are often formed on the surfaces of electrodes connected by the conductive particles. When conductive particles having protrusions on the outer surface of the conductive portion are used, the oxide film can be effectively removed by the protrusions by disposing the conductive particles between the electrodes and pressure-bonding the conductive particles. Therefore, the electrode and the conductive portion are more reliably brought into contact with each other, and the connection resistance between the electrodes is further lowered. At the time of connection between the electrodes, the filler between the conductive particles and the electrodes can be effectively eliminated by the protrusions of the conductive particles. Therefore, the conduction reliability between the electrodes is further enhanced.
Examples of the method for forming the protrusions include a method in which a core substance is attached to the surface of the base particle and then a conductive portion is formed by electroless plating, and a method in which a conductive portion is formed on the surface of the base particle by electroless plating, then a core substance is attached, and then a conductive portion is further formed by electroless plating. In order to form the protrusions, a method for forming the conductive portion on the base particle by electroless plating without using the core substance, then depositing plating in a protrusion shape on the surface of the conductive portion, and further forming the conductive portion by electroless plating, and the like may be used.
Examples of the method for attaching the core substance to the surface of the base particle include a method in which a core substance is added to a dispersion of the base particle, the core substance is accumulated on the surface of the base particle by van der Waals force, and the core substance is attached, and a method in which a core substance is added to a container containing the base particle, and the core substance is attached to the surface of the base particle by a mechanical action such as rotation of the container. From the viewpoint of controlling the amount of the core substance to be attached, the method for attaching the core substance to the surface of the base particle is preferably a method for accumulating and attaching the core substance to the surface of the base particle in the dispersion.
Examples of the substance constituting the core substance include a conductive substance and a non-conductive substance. Examples of the conductive substance include a metal, a metal oxide, a conductive non-metal such as graphite, and a conductive polymer. Examples of the conductive polymer include polyacetylene. Examples of the non-conductive substance include silica, alumina, titanium oxide, tungsten carbide, and zirconia. From the viewpoint of further enhancing the conduction reliability between the electrodes, the core substance is preferably a metal.
The metal is not particularly limited. Examples of the metal include metals such as gold, silver, copper, platinum, zinc, iron, lead, tin, aluminum, cobalt, indium, nickel, chromium, titanium, antimony, bismuth, germanium, and cadmium, and alloys composed of two or more kinds of metals such as a tin-lead alloy, a tin-copper alloy, a tin-silver alloy, a tin-lead-silver alloy, and tungsten carbide. From the viewpoint of further enhancing the conduction reliability between the electrodes, the metal is preferably nickel, copper, silver, or gold. The metal may be the same as or different from the metal constituting the conductive portion.
The shape of the core substance is not particularly limited. The shape of the core substance is preferably massive. Examples of the core substance include particulate agglomerates, agglomerates in which a plurality of microparticles are agglomerated, and amorphous agglomerates.
The particle size of the core substance is preferably 0.001 μm or more and more preferably 0.05 μm or more, and is preferably 0.9 μm or less and more preferably 0.2 μm or less. When the particle size of the core substance is the above lower limit or more and the above upper limit or less, the connection resistance between the electrodes can be effectively reduced.
The particle size of the core substance is preferably an average particle size, and more preferably a number average particle size. The particle size of the core substance can be determined, for example, by observing 50 arbitrary core substances with an electron microscope or an optical microscope, calculating the average value of the particle sizes of the respective core substances, or performing laser diffraction type particle size distribution measurement.

<Non-conductive filler>

The conductive paste preferably further contains a non-conductive filler. The non-conductive filler is a filler having no conductivity.
Examples of the non-conductive filler include silica, titania, alumina, sorbitol, and zinc oxide. Only one kind of the non-conductive filler may be used, or two or more kinds thereof may be used in combination.
From the viewpoint of further enhancing the storage stability, the non-conductive filler preferably contains titania, silica, or alumina, more preferably contains silica or titania, and further preferably contains titania.
From the viewpoint of further enhancing the storage stability, the non-conductive filler is preferably a solid at 25°C. From the viewpoint of further enhancing the storage stability, the non-conductive filler is preferably dispersed in the conductive paste.

When the non-conductive filler is a solid at 25°C, the particle size of the non-conductive filler is preferably 0.001 μm or more, more preferably 0.01 μm or more, and further preferably 0.1 μm or more, and is preferably 10 μm or less, more preferably 5 μm or less, and further preferably 1 μm or less. When the particle size of the non-conductive filler is the above lower limit or more and the above upper limit or less, the storage stability can be further enhanced.

The particle size of the non-conductive filler is preferably an average particle size, and more preferably a number average particle size. The average particle size of the non-conductive filler is determined, for example, by observing 50 arbitrary non-conductive fillers with an electron microscope or an optical microscope, and calculating the average value of the particle sizes of the non-conductive fillers or performing laser diffraction type particle size distribution measurement.

The ratio of the particle size of the non-conductive filler to the particle size of the conductive filler (the particle size of the non-conductive filler/the particle size of conductive filler) is preferably 0.0002 or more, more preferably 0.002 or more, and further preferably 0.02 or more, and is preferably 0.5 or less, more preferably 0.1 or less, and further preferably 0.05 or less. When the ratio (the particle size of the non-conductive filler/the particle size of conductive filler) is the above lower limit or more and the above upper limit or less, the storage stability can be further enhanced.

The content of the non-conductive filler in 100 wt% of the conductive paste is preferably 0.1 wt% or more and more preferably 0.3 wt% or more, and is preferably 10 wt% or less and more preferably 5 wt% or less. When the content of the non-conductive filler is the above lower limit or more and the above upper limit or less, the storage stability can be further enhanced.

The total content of the conductive filler and the non-conductive filler in 100 wt% of the conductive paste is preferably 10 wt% or more and more preferably 15 wt% or more, and is preferably 40 wt% or less and more preferably 30 wt% or less. When the total content of the conductive filler and the non-conductive filler is the above lower limit or more and the above upper limit or less, the storage stability can be further enhanced.

<Chelating agent>

The conductive paste preferably further contains a chelating agent. The chelating agent is preferably used in combination with the amine curing agent. When the chelating agent is used in combination with the amine curing agent, the surface of the amine curing agent can be protected, and the storage stability of the conductive paste can be further enhanced.

Examples of the chelating agent include borate ester, barbituric acid, and isophthalic acid. Only one kind of the chelating agent may be used, or two or more kinds thereof may be used in combination.

From the viewpoint of further enhancing the storage stability, the chelating agent preferably contains borate ester, and more preferably contains tributyl borate.

The content of the chelating agent in 100 wt% of the conductive paste is preferably 0.01 wt% or more, more preferably 0.1 wt% or more, and particularly preferably 0.2 wt% or more, and is preferably 10 wt% or less and more preferably 5 wt% or less. When the content of the chelating agent is the above lower limit or more and the above upper limit or less, the storage stability can be further enhanced.

The content of the chelating agent is preferably 0.5 parts by weight or more and more preferably 1 part by weight or more, and is preferably 100 parts by weight or less and more preferably 50 parts by weight or less with respect to 100 parts by weight of the content of the amine curing agent. When the content of the chelating agent is the above lower limit or more and the above upper limit or less, the storage stability can be further enhanced.

<Other components>

The conductive paste may contain components other than the curable compound, the curing agent, the conductive filler, the non-conductive filler, and the chelating agent. The conductive paste may contain, as other components, a solvent, an inorganic filler, an organic filler, a colorant, a polymerization inhibitor, a chain transfer agent, an antioxidant, an ultraviolet absorber, an antifoaming agent, a leveling agent, a surfactant, a slipping agent, an antiblocking agent, a wax, a masking agent, a deodorant, an aromatic agent, an antiseptic agent, an antibacterial agent, an antistatic agent, an adhesion imparting agent, and the like.

(RFID inlay and method for producing RFID inlay)

An RFID inlay according to the present invention includes a substrate having a wiring on a surface, a chip having an electrode on a surface, and an adhesive portion bonding the substrate and the chip. In the RFID inlay according to the present invention, the material of the adhesive portion is the above-described conductive paste (the first conductive paste or the second conductive paste). In the RFID inlay according to the present invention, the wiring and the electrode are electrically connected by the conductive filler in the adhesive portion.

Fig. 1 is a cross-sectional view schematically illustrating an RFID inlay using a conductive paste according to a

first embodiment of the present invention.

An RFID inlay 81 illustrated in Fig. 1 includes a substrate 82 having a wiring on a surface, a chip 83 having an electrode on a surface, and an adhesive portion 84 bonding the substrate 82 and the chip 83. The material of the adhesive portion 84 is a conductive paste containing a conductive filler 1. The adhesive portion 84 is formed of a conductive paste containing the conductive filler 1. The adhesive portion 84 is preferably formed by curing a conductive paste containing the conductive filler 1.

The substrate 82 has a wiring 82a on the surface (upper surface). The chip 83 has an electrode 83a on the surface (lower surface). The wiring 82a and the electrode 83a are electrically connected by the conductive filler 1 in the adhesive portion 84.

A method for producing an RFID inlay according to the present invention includes the following steps (1) to (3): (1) a first disposing step of disposing the above-described conductive paste (the first conductive paste or the second conductive paste) on a surface of a substrate having a wiring on a surface; (2) a second disposing step of disposing a chip having an electrode on a surface on a surface of the conductive paste opposite to the substrate side; and (3) a bonding step of heating and pressurizing the conductive paste to form an adhesive portion bonding the substrate and the chip with the conductive paste, and electrically connecting the wiring and the electrode by the conductive filler in the adhesive portion.

In the RFID inlay and the method for producing an RFID inlay according to the present invention, since a specific conductive paste is used, adhesiveness between the substrate and the chip can be enhanced, and the conduction reliability can be enhanced.

In the method for producing an RFID inlay, it is preferable that the substrate has an elongated shape, and in the first disposing step, the second disposing step, and the bonding step, the substrate having an elongated shape is conveyed by a roll-to-roll method to produce an RFID inlay. In this case, a plurality of RFID inlays can be continuously produced, and the production efficiency of the RFID inlay can be further enhanced.

When the roll-to-roll method is used, the transport speed of the substrate is not particularly limited.

Examples of the method for disposing the conductive paste include application by a dispenser, screen printing, and ejection by an inkjet device.

The heating temperature in the bonding step is preferably 100°C or higher and more preferably 150°C or higher, and is preferably 400°C or lower, more preferably 300°C or lower, and further preferably 250°C or lower. When the heating temperature in the bonding step is the above lower limit or more and the above upper limit or less, the electrical connection between the chip and the substrate can be improved.

The pressurizing pressure in the bonding step is preferably 0.5 N or more and more preferably 1 N or more, and is preferably 3.5 N or less, more preferably 3 N or less, and further preferably 2.5 N or less. When the pressurizing pressure in the bonding step is the above lower limit or more and the above upper limit or less, the adhesiveness between the substrate and the chip can be enhanced, and the conduction reliability can be enhanced.

The heating and pressurizing time in the bonding step is not particularly limited. The heating and pressurizing time in the bonding step may be 2 seconds or more, 15 seconds or less, 10 seconds or less, 9 seconds or less, or 7 seconds or less.

The RFID inlay may be cut into a predetermined size as necessary, or may be cut and used. It is preferable that a plurality of the chips are bonded onto the substrate having an elongated shape by a plurality of the adhesive portions. A plurality of laminates of the chip and the adhesive portion may be disposed on the substrate having an elongated shape. In the first disposing step, the conductive paste is preferably disposed at a plurality of positions on the surface of the substrate having an elongated shape. In the second disposing step, it is preferable to dispose the chips on the surface of each of the conductive pastes disposed at the plurality of positions opposite to the substrate side using the plurality of chips. After the chip is bonded onto the substrate having an elongated shape by the adhesive portion, the substrate having an elongated shape may be cut.

The substrate is not particularly limited. The substrate is preferably a circuit board. Examples of the circuit board include a resin film, a flexible printed board, a rigid flexible board, a glass substrate, and a paper substrate. The substrate may be a resin substrate, a glass substrate, or a paper substrate.

The substrate has a wiring (antenna pattern) on a surface. A wiring (antenna pattern) is formed on a surface of a base material. The substrate preferably includes a base material and a wiring (antenna pattern) disposed on a surface of the base material.

Examples of the material of the base material include a resin, glass, and paper. Examples of the resin include polyethylene terephthalate (PET), polypropylene (PP), and polyvinyl chloride (PVC). The paper may be impregnated with an epoxy resin or a phenol resin. From the viewpoint of further enhancing the adhesiveness and producing the RFID inlay by a roll-to-roll method, the material of the base material is preferably a resin or paper, and more preferably polyethylene terephthalate (PET) or paper. The base material may be a resin, glass, or paper.

Examples of the wiring (antenna pattern) include a gold wiring, a nickel wiring, a tin wiring, an aluminum wiring, a silver wiring, an SUS wiring, a copper wiring, a molybdenum wiring, and a tungsten wiring. From the viewpoint of improving the operation sensitivity in the UHF band (860 MHz to 960 MHz), the wiring is preferably an aluminum wiring.

From the viewpoint of suppressing deformation of the substrate due to heat at the time of mounting a chip (for example, an IC chip) and enhancing flexibility, the thickness of the substrate is preferably 20 μm or more and more preferably 30 μm or more, and is preferably 200 μm or less and more preferably 100 μm or less.

The shapes of the substrate and the base material are not particularly limited. From the viewpoint of producing the RFID inlay by a roll-to-roll method, the substrate and the base material are preferably elongated. The lengths of the substrate and the base material are not particularly limited. The lengths of the substrate and the base material may be 1 m or more, 10 m or more, 5000 m or less, or 1000 m or less.

Examples of the chip include a semiconductor chip (IC chip).

The chip has an electrode on a surface. Examples of the electrode include metal electrodes such as a gold electrode, a nickel electrode, a tin electrode, an aluminum electrode, a silver electrode, an SUS electrode, a copper electrode, a molybdenum electrode, and a tungsten electrode. From the viewpoint of further enhancing the conduction reliability, the electrode is preferably a copper electrode or a gold electrode, and more preferably a copper electrode.

The number of electrodes per chip is not particularly limited. The number of electrodes per chip may be 1 or more, 4 or more, 20 or less, or 10 or less.

The shape of the chip is not particularly limited. The shape of the chip may be a rectangular shape, a triangular shape, or a circular shape.

The plane area of the chip is preferably 0.04 $mm^2$ or more, more preferably 0.09 $mm^2$ or more, and further preferably 0.16 $mm^2$ or more, and is preferably 0.50 $mm^2$ or less, more preferably 0.40 $mm^2$ or less, and further preferably 0.30 $mm^2$ or less. When the plane area of the chip is the above lower limit or more, the conductive paste can be disposed on a fine wiring with high accuracy. When the plane area of the chip is the above upper limit or less, the conduction reliability can be maintained even when the RFID inlay is left to stand for a long time in a high temperature and high humidity environment. The conductive paste according to the present invention can be suitably used for bonding relatively small chips.

Hereinafter, the present invention will be specifically described with reference to Examples and Comparative Examples. The present invention is not limited only to the following Examples.

The following materials were prepared.

Curable compound:

"EP-3950S" (glycidylamine-type epoxy compound) manufactured by ADEKA Corporation

"EP-3980S" (glycidylamine-type epoxy compound) manufactured by ADEKA Corporation

"EXA830CRP" (bisphenol F type epoxy compound) manufactured by DIC Corporation

"EXA850CRP" (bisphenol A type epoxy compound) manufactured by DIC Corporation

Curing agent:

"Karenz MT PE-1" (secondary thiol curing agent having an ester skeleton) manufactured by Resonac Holdings Corporation

"TMMP" (primary thiol curing agent having an ester skeleton) manufactured by SC ORGANIC CHEMICAL CO., LTD.

"AMICURE PN23" (amine adduct curing agent, solid at 25°C) manufactured by Ajinomoto Fine-Techno Co., Inc.

"Diethylenetriamine" (amine curing agent, liquid at 25°C) manufactured by TCI

"TS-G" (primary thiol curing agent having no ester skeleton) manufactured by SHIKOKU CHEMICALS CORPORATION

"C3TS-G" (primary thiol curing agent having no ester skeleton) manufactured by SHIKOKU CHEMICALS CORPORATION

"PEMP" (primary thiol curing agent having an ester skeleton) manufactured by SAKAI CHEMICAL INDUSTRY CO., LTD.

"NOVACURE HX4922HP" (microcapsule-type curing agent) manufactured by Asahi Kasei E-materials Inc.

Conductive filler:

"CN050" (nickel particles, average particle size: 5 μm) manufactured by NIKKO RICA CORPORATION

"NIB-205-S" (conductive particle including a resin particle and a conductive layer disposed on a surface of the resin particle, average particle size: 5 μm) manufactured by SEKISUI CHEMICAL CO., LTD.

Non-conductive filler:

"RX-200" (silica, solid at 25°C, average particle size: 0.012 μm) manufactured by NIPPON AEROSIL CO., LTD.

"GEL ALL D" (sorbitol (thixotropic agent), solid at 25°C, average particle size: 0.10 μm) manufactured by New Japan Chemical Co., Ltd

Chelating agent:

"Tributyl borate" manufactured by TCI

Thixotropic agent (non-conductive filler):

"GEL ALL D" (sorbitol, solid at 25°C, average particle size: 0.10 μm) manufactured by New Japan Chemical Co., Ltd.

Chip:

IC chip (copper electrode, "UCODE 9" manufactured by NXP Semiconductors, plane area: 0.22 $mm^2$)

Substrate:

PET film (elongated shape, resin film having aluminum wiring in UHF band (860 MHz to 960 MHz) operating frequency)

(Example 1)

(1) Preparation of conductive paste

The materials shown in Table 1 below were blended in the blending amounts (parts by weight) shown in Table 1 below, and stirred using a planetary stirrer ("Awatori Rentaro" manufactured by THINKY CORPORATION) to obtain a conductive paste (anisotropic conductive paste).

(2) Preparation of RFID inlay

The obtained conductive paste was applied onto a PET film by a jet dispensing method to form a conductive paste layer (adhesive portion layer) (first disposing step). Next, an IC chip was laminated on the surface of the conductive paste layer (adhesive portion layer) opposite to the substrate side such that the wiring on the PET film surface and the electrode on the chip surface faced each other (second disposing step). Thereafter, thermocompression bonding was performed under the conditions of an upper heat tool of 180°C, a lower heat tool of 180°C, a pressure of 2 N, and a compression bonding time of 3 seconds to cure the conductive paste layer (adhesive portion layer), thereby forming an adhesive portion. The wiring on the surface of the PET film and the electrode on the surface of the chip were electrically connected by the

conductive filler (conductive particles) in the adhesive portion to obtain a connection structure (bonding step). Note that the first disposing step, the second disposing step, and the bonding step were performed using "DDA 40000" (roll-to-roll method) manufactured by Muhlbauer. The obtained connection structure was cut into a size of 5 cm × 1.5 cm using "DCL 30000" manufactured by Muhlbauer to obtain 50 RFID inlays.

(Examples 2 to 12 and Comparative Examples 1 to 6)

A conductive paste and an RFID inlay were obtained in the same manner as in Example 1 except that the blending components and the blending amounts of the conductive paste were changed as shown in Tables 1, 3, 5, 7, and 9.

(Evaluation)

(1) Differential scanning calorimetry

A differential scanning calorimeter ("TA7000" manufactured by Hitachi High-Tech Science Corporation) was prepared, 5 mg of the obtained conductive paste was taken in a dedicated aluminum pan, and the aluminum pan was covered with a dedicated jig. This dedicated aluminum pan and an empty aluminum pan (reference) were placed in a heating unit, and heated from 30°C to 200°C at a temperature increasing rate of 10°C/min in the air atmosphere to observe the reverse heat flow and the non-reverse heat flow. Using the exothermic peak observed in the non-reverse heat flow as the exothermic peak of the conductive paste, the exothermic onset temperature, the exothermic peak top temperature, and the exothermic end temperature were determined.

(2) Storage stability (pot life)

The viscosity (η25) at 25°C of the conductive paste immediately after preparation was measured by the method described above. The viscosity (ηα) at 25°C after storing the conductive paste at 25°C and 50% RH for 24 hours was measured by the method described above. The ratio of the viscosity (ηα) after storage to the viscosity (η25) immediately after preparation (viscosity (ηα) after storage/viscosity (η25) immediately after preparation) was determined, and the storage stability (pot life) was determined according to the following criteria.

[Determination criteria for storage stability (pot life)]

◦◦: The ratio of the viscosity after storage to the viscosity immediately after preparation is less than 1.1
◦: The ratio of the viscosity after storage to the viscosity immediately after preparation is 1.1 or more and less than 1.25.
×: The ratio of the viscosity after storage to the viscosity immediately after preparation is 1.25 or more.

(3) Curability of conductive paste

(3-1) Curability (low-temperature rapid curability) of conductive paste

A conductive paste was applied onto a glass plate to have a thickness of 30 μm. The glass plate was placed on the surface of the hot plate from the surface opposite to a side to which the paste was applied, and the temperature at which the conductive paste gelated (cured) within 3 seconds was measured. The curability (low-temperature rapid curability) of the conductive paste was determined according to the following criteria. Note that after 3 seconds from the heating, the yarn pulling was checked using a needle with a handle, and when the yarn was not broken, it was determined that the conductive paste was cured.

[Determination criteria for curability (low-temperature rapid curability) of conductive paste]

A: The temperature at which the conductive paste is cured is lower than 160°C.
B: The temperature at which the conductive paste is cured is 160°C or higher and lower than 200°C.
C: The temperature at which the conductive paste is cured is 200°C or higher, or the conductive paste is not cured.

(3-2) Curability (gel time) of conductive paste

A conductive paste was applied onto a glass plate to have a thickness of 30 μm. The glass plate was placed on the surface of a hot plate (set temperature: 180°C) from the surface opposite to a side to which the conductive paste was applied, and the elapsed time until the conductive paste gelated was measured. The curability (gel time) of the conductive paste was determined according to the following criteria. The yarn pulling was checked using a needle with a handle every 5 seconds, and when the yarn was not broken, it was determined that the conductive paste gelated.

[Determination criteria for curability (gel time) of conductive paste]

◦◦◦◦: The elapsed time until the conductive paste gelates is less than 5 seconds.
◦◦◦: The elapsed time until the conductive paste gelates is 5 seconds or more and less than 10 seconds.
◦◦: The elapsed time until the conductive paste gelates is 10 seconds or more and less than 15 seconds.
◦: The elapsed time until the conductive paste gelates is 15 seconds or more and less than 30 seconds.
×: The elapsed time until the conductive paste gelates is 30 seconds or more.

(4) Adhesiveness (die shear strength)

For the obtained RFID inlay, the chip was peeled off from the base material under the conditions of a tool height of 30 μm and a speed of 100 μm/sec using a die shear tester ("DAGE4000PLUS" manufactured by Nordson Corporation), and the die shear strength at 25°C was evaluated. The adhesiveness was determined according to the following criteria.

[Determination criteria for adhesiveness]

◦◦: The die shear strength is 7.0 N or more.
◦: The die shear strength is 4.0 N or more and less than 7.0 N.
×: The die shear strength is less than 4.0 N.

(5) Tackiness of cured product

The prepared conductive paste was filled in a PTFE mold, and the conductive paste filled in the mold was heated in an oven at 180°C for 300 seconds to obtain a strip-shaped cured product of 5 mm × 40 mm × 2 mm. The obtained cured product was left to stand at room temperature for 12 hours or more, and the cured product was cooled. At 25°C, it was observed whether or not the cured product was lifted up when one end of the cured product was touched with the tip of the needle with a handle. The tackiness of the cured product was determined according to the following criteria.

[Determination criteria for tackiness of cured product]

◦◦: The cured product is not lifted up.
◦: One end side of the cured product is lifted up while the other end not touched by the needle with a handle is grounded.
×: The whole cured product is lifted up.

(6) Conduction reliability

The obtained 50 RFID inlays were left to stand at 85°C and 85% RH (in a high temperature and high humidity environment) for 168 hours, and then placed in a dark box shielding external radio waves, and the peak sensitivity at 25°C in the UHF band (860 MHz to 960 MHz) was measured using a frequency reader ("Tagformance Pro" manufactured by VOYANTIC). The conduction reliability was determined according to the following criteria.

[Determination criteria for conduction reliability]

◦◦: The peak sensitivity of all RFID inlays is less than -18 dBm.
◦: Not applicable to o and ×.
×: The peak sensitivity of at least one RFID inlay is -16.4 dBm or more.

The composition and results of the conductive paste are shown in Tables 1 to 10 below.

[Table 1]

| | | | | Example 1 | Example 2 | Example 3 |
|---|---|---|---|---|---|---|
| Conductive paste | Curable compound | EP-3950S | Parts by weight | 42.0 | | 42.0 |
| | | EP-3980S | Parts by weight | | 42.0 | |
| | Curing agent | Karenz MT PE-1 | Parts by weight | 25.0 | 25.0 | 25.0 |
| | | TMMP | Parts by weight | | | |
| | | AMICURE PN23 | Parts by weight | 5.0 | 5.0 | 5.0 |
| | | Diethylenetriamine | Parts by weight | | | |
| | Conductive filler | CN050 | Parts by weight | 25.0 | 25.0 | 25.0 |
| | Non-conductive filler | RX-200 | Parts by weight | 2.0 | 2.0 | |
| | | GEL ALL D | Parts by weight | | | |
| | Chelating agent | Tributyl borate | Parts by weight | 1.0 | 1.0 | 1.0 |
| | Ratio (particle size of non-conductive filler/particle size of conductive filler) | | - | 0.002 | 0.002 | - |

[Table 2]

| | | | | Example 1 | Example 2 | Example 3 |
|---|---|---|---|---|---|---|
| Evaluation | Exothermic onset temperature | | °C | 60.0 | 65.0 | 60.0 |
| | Exothermic peak top temperature | | °C | 120.0 | 128.0 | 120.0 |
| | Exothermic end temperature | | °C | 140.0 | 145.0 | 140.0 |
| | Storage stability | | - | ○ | ○ | ○ |
| | Curability of conductive paste | Low-temperature rapid curability | - | C | C | C |
| | | Gel time | - | ○ | ○ | ○ |
| | Adhesiveness | | - | ○○ | ○○ | ○ |
| | Tackiness of cured product | | - | ○○ | ○○ | ○○ |
| | Conduction reliability | | - | ○○ | ○○ | ○ |

[Table 3]

| | | | | Example 4 | Example 5 | Example 6 | Example 7 | Example 8 |
|---|---|---|---|---|---|---|---|---|
| Conductive paste | Curable compound | EXA830CRP | Parts by weight | 35.0 | 35.0 | | 25.0 | 45.0 |
| | | EXA850CRP | Parts by weight | | | 35.0 | | |
| | Curing agent | TS-G | Parts by weight | 20.0 | | | | |
| | | C3TS-G | Parts by weight | | 20.0 | 20.0 | 30.0 | 10.0 |
| | | PEMP | Parts by weight | | | | | |
| | | NOVACURE HX4922HP | Parts by weight | 17.0 | 17.0 | 17.0 | 17.0 | 17.0 |
| | Conductive filler | CN050 | Parts by weight | 25.0 | 25.0 | 25.0 | 25.0 | 25.0 |
| | | NIB-205-S | Parts by weight | | | | | |
| | Non-conductive filler | RX-200 | Parts by weight | | | | | |
| | | GEL ALL D | Parts by weight | 2.0 | 2.0 | 2.0 | 2.0 | 2.0 |
| | Chelating agent | Tributyl borate | Parts by weight | 1.0 | 1.0 | 1.0 | 1.0 | 1.0 |
| | Ratio (particle size of non-conductive filler/ particle size of conductive filler) | | - | 0.02 | 0.02 | 0.02 | 0.02 | 0.02 |

[Table 4]

| | | | | Example 4 | Example 5 | Example 6 | Example 7 | Example 8 |
|---|---|---|---|---|---|---|---|---|
| Evaluation | Exothermic onset temperature | | °C | 75.0 | 75.0 | 78.0 | 75.0 | 75.0 |
| | Exothermic peak top temperature | | °C | 85.0 | 85.0 | 90.0 | 85.0 | 85.0 |
| | Exothermic end temperature | | °C | 150.0 | 150.0 | 150.0 | 150.0 | 150.0 |
| | Storage stability | | - | ○ | ○○ | ○ | ○ | ○○ |
| | Curability of conductive paste | Low-temperature rapid curability | - | A | A | A | A | B |
| | | Gel time | - | ○○○○ | ○○○○ | ○○○○ | ○○○○ | ○○○○ |
| | Adhesiveness | | - | ○○ | ○○ | ○○ | ○○ | ○○ |
| | Tackiness of cured product | | - | ○○ | ○○ | ○○ | ○○ | ○○ |
| | Conduction reliability | | - | ○ | ○○ | ○○ | ○ | ○ |

[Table 5]

| | | | | Example 9 | Example 10 | Example 11 | Example 12 |
|---|---|---|---|---|---|---|---|
| Conductive paste | Curable compound | EXA830CRP | Parts by weight | 35.0 | 30.0 | 40.0 | 35.0 |
| | | EXA850CRP | Parts by weight | | | | |
| | Curing agent | TS-G | Parts by weight | | | | |
| | | C3TS-G | Parts by weight | 20.0 | 15.0 | 22.0 | 20.0 |
| | | PEMP | Parts by weight | | | | |
| | | NOVACURE HX4922HP | Parts by weight | 17.0 | 27.0 | 10.0 | 17.0 |
| | Conductive filler | CN050 | Parts by weight | 25.0 | 25.0 | 25.0 | |
| | | NIB-205-S | Parts by weight | | | | 25.0 |
| | Non-conductive filler | RX-200 | Parts by weight | | | | |
| | | GEL ALL D | Parts by weight | 2.0 | 2.0 | 2.0 | 2.0 |
| | Chelating agent | Tributyl borate | Parts by weight | | 1.0 | 1.0 | 1.0 |
| | Ratio (particle size of non-conductive filler/particle size of conductive filler) | | - | 0.02 | 0.02 | 0.02 | 0.02 |

[Table 6]

| | | | | Example 9 | Example 10 | Example 11 | Example 12 |
|---|---|---|---|---|---|---|---|
| Evaluation | Exothermic onset temperature | | °C | 70.0 | 75.0 | 75.0 | 75.0 |
| | Exothermic peak top temperature | | °C | 80.0 | 85.0 | 85.0 | 85.0 |
| | Exothermic end temperature | | °C | 150.0 | 150.0 | 150.0 | 150.0 |
| | Storage stability | | - | ○ | ○ | ○○ | ○○ |
| | Curability of conductive paste | Low-temperature rapid curability | - | A | A | B | A |
| | | Gel time | - | ○○○○ | ○○○○ | ○○○○ | ○○○○ |
| | Adhesiveness | | - | ○○ | ○○ | ○○ | ○○ |
| | Tackiness of cured product | | - | ○○ | ○○ | ○○ | ○○ |
| | Conduction reliability | | - | ○○ | ○○ | ○ | ○ |

[Table 7]

| | | | | Comparative Example 1 | Comparative Example 2 | Comparative Example 3 | Comparative Example 4 |
|---|---|---|---|---|---|---|---|
| Conductive paste | Curable compound | EP-3950S | Parts by weight | 42.0 | 42.0 | 42.5 | 42.5 |
| | | EP-3980S | Parts by weight | | | | |
| | | Karenz MT PE-1 | Parts by weight | 25.0 | | | |
| | Curing agent | TMMP | Parts by weight | | 25.0 | 25.5 | |
| | | AMICURE PN23 | Parts by weight | | 5.0 | 5.0 | 5.0 |
| | | Diethylenetriamine | Parts by weight | 5.0 | | | |
| | Conductive filler | CN050 | Parts by weight | 25.0 | 25.0 | 25.0 | 25.0 |
| | Non-conductive filler | RX-200 | Parts by weight | 2.0 | 2.0 | 2.0 | 2.0 |
| | | GEL ALL D | Parts by weight | | | | |
| | Chelating agent | Tributyl borate | Parts by weight | 1.0 | 1.0 | | 1.0 |
| | Ratio (particle size of non-conductive filler/particle size of conductive filler) | | - | 0.002 | 0.002 | 0.002 | 0.002 |

[Table 8]

| | | | | Comparative Example 1 | Comparative Example 2 | Comparative Example 3 | Comparative Example 4 |
|---|---|---|---|---|---|---|---|
| Evaluation | Exothermic onset temperature | | °C | 30.0 | 45.0 | 40.0 | 90 |
| | Exothermic peak top temperature | | °C | 90.0 | 100.0 | 95.0 | 125 |
| | Exothermic end temperature | | °C | 115.0 | 120.0 | 115.0 | 160 |
| | Storage stability | | - | × | × | × | ○○ |
| | Curability of conductive paste | Low-temperature rapid curability | - | C | A | A | C |
| | | Gel time | - | ○○ | ○○ | ○○ | × |
| | Adhesiveness | | - | ○○ | ○○ | ○○ | × |
| | Tackiness of cured product | | - | ○○ | ○○ | ○○ | ○ |
| | Conduction reliability | | - | ○○ | ○○ | ○○ | × |

[Table 9]

| | | | | Comparative Example 5 | Comparative Example 6 |
|---|---|---|---|---|---|
| Conductive paste | Curable compound | EXA830CRP | Parts by weight | 35.0 | 55.0 |
| | | EXA850CRP | Parts by weight | | |
| | Curing agent | TS-G | Parts by weight | | |
| | | C3TS-G | Parts by weight | | |
| | | PEMP | Parts by weight | 20.0 | |
| | | NOVACURE HX4922HP | Parts by weight | 17.0 | 17.0 |
| | Conductive filler | CN050 | Parts by weight | 25.0 | 25.0 |
| | | NIB-205-S | Parts by weight | | |
| | Non-conductive filler | RX-200 | Parts by weight | | |
| | | GEL ALL D | Parts by weight | 2.0 | 2.0 |
| | Chelating agent | Tributyl borate | Parts by weight | 1.0 | 1.0 |
| | Ratio (particle size of non-conductive filler/particle size of conductive filler) | | - | 0.02 | 0.02 |

[Table 10]

| | | | | Comparative Example 5 | Comparative Example 6 |
|---|---|---|---|---|---|
| Evaluation | Exothermic onset temperature | | °C | 90.0 | 105.0 |
| | Exothermic peak top temperature | | °C | 95.0 | 115.0 |
| | Exothermic end temperature | | °C | 150.0 | 160.0 |
| | Storage stability | | - | × | ○○ |
| | Curability of conductive paste | Low-temperature rapid curability | - | A | C |
| | | Gel time | - | ○○○○ | ○ |
| | Adhesiveness | | - | ○○ | × |
| | Tackiness of cured product | | - | ○○ | ○○ |
| | Conduction reliability | | - | ○ | × |

**EXPLANATION OF SYMBOLS**

1: Conductive filler
81: RFID inlay
82: Substrate having wiring on surface
82a: Wiring
83: Chip having electrode on surface
83a: Electrode
84: Adhesive portion

## Claims

**1.** A conductive paste comprising: a curable compound; a curing agent; and a conductive filler, an exothermic onset temperature being 50°C or higher and 80°C or lower when the conductive paste is heated from 30°C to 200°C at a temperature increasing rate of 10°C/min and subjected to differential scanning calorimetry.

**2.** A conductive paste comprising: a curable compound; a curing agent; and a conductive filler,

the curing agent containing a secondary thiol curing agent or a primary thiol curing agent having no ester skeleton, and
the conductive filler being a conductive particle including a resin particle and a conductive layer disposed on a surface of the resin particle, or a metal particle having a melting point of higher than 450°C.

**3.** The conductive paste according to claim 1 or 2, wherein the curable compound contains a glycidylamine-type epoxy compound.

**4.** The conductive paste according to any one of claims 1 to 3, wherein the curing agent contains a thiol curing agent having two or more thiol groups.

**5.** The conductive paste according to any one of claims 1 to 4, wherein the curing agent contains a thiol curing agent having a structure represented by the following Formula (1):

[Chemical 1]

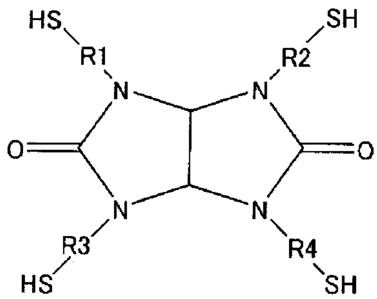

···(1)

in the Formula (1), R1, R2, R3, and R4 each represent an alkylene group having 1 to 5 carbon atoms.

**6.** The conductive paste according to any one of claims 1 to 5, wherein

the curing agent contains a secondary thiol curing agent or a primary thiol curing agent having no ester skeleton, and
a total content of the secondary thiol curing agent and the primary thiol curing agent having no ester skeleton in 100 wt% of the conductive paste is 5 wt% or more and 50 wt% or less.

**7.** The conductive paste according to any one of claims 1 to 6, wherein the curing agent contains a secondary thiol curing agent.

**8.** The conductive paste according to any one of claims 1 to 7, wherein an exothermic end temperature is 85°C or higher and 180°C or lower when the conductive paste is heated from 30°C to 200°C at a temperature increasing rate of 10°C/min and subjected to differential scanning calorimetry.

**9.** The conductive paste according to any one of claims 1 to 8, wherein an absolute value of a difference between an exothermic onset temperature and an exothermic end temperature is 5°C or higher and 100°C or lower when the conductive paste is heated from 30°C to 200°C at a temperature increasing rate of 10°C/min and subjected to differential scanning calorimetry.

**10.** The conductive paste according to any one of claims 1 to 9, wherein the curing agent contains a microcapsule-type curing agent.

**11.** The conductive paste according to claim 10, wherein a content of the microcapsule-type curing agent in 100 wt% of the conductive paste is 5 wt% or more and 40 wt% or less.

**12.** The conductive paste according to any one of claims 1 to 11, wherein a particle size of the conductive filler is 10 μm or less.

**13.** The conductive paste according to any one of claims 1 to 12, wherein a content of the conductive filler in 100 wt% of the conductive paste is 0.1 wt% or more and 50 wt% or less.

**14.** The conductive paste according to any one of claims 1 to 13, wherein the curing agent contains an amine curing agent that is a solid at 25°C.

**15.** The conductive paste according to any one of claims 1 to 14, further comprising a chelating agent.

**16.** The conductive paste according to claim 15, wherein the chelating agent contains a boric acid ester.

**17.** The conductive paste according to any one of claims 1 to 16, further comprising a non-conductive filler.

**18.** The conductive paste according to claim 17, wherein a ratio of a particle size of the non-conductive filler to a particle size of the conductive filler is 0.5 or less.

**19.** The conductive paste according to any one of claims 1 to 18, which is used for obtaining an RFID inlay.

**20.** An RFID inlay comprising:

a substrate having a wiring on a surface; a chip having an electrode on a surface; and an adhesive portion bonding the substrate and the chip,
a material of the adhesive portion being the conductive paste according to any one of claims 1 to 19, and
the wiring and the electrode being electrically connected by the conductive filler in the adhesive portion.

**21.** A method for producing an RFID inlay, comprising:

a first disposing step of disposing the conductive paste according to any one of claims 1 to 19 on a surface of a substrate having a wiring on a surface;
a second disposing step of disposing a chip having an electrode on a surface on a surface of the conductive paste opposite to the substrate side; and
a bonding step of heating and pressurizing the conductive paste to form an adhesive portion bonding the substrate and the chip with the conductive paste, and electrically connecting the wiring and the electrode by the conductive filler in the adhesive portion.

**22.** The method for producing an RFID inlay according to claim 21, wherein

the substrate has an elongated shape, and
in the first disposing step, the second disposing step, and the bonding step, the substrate having an elongated shape is conveyed by a roll-to-roll method to produce an RFID inlay.

[FIG. 1.]

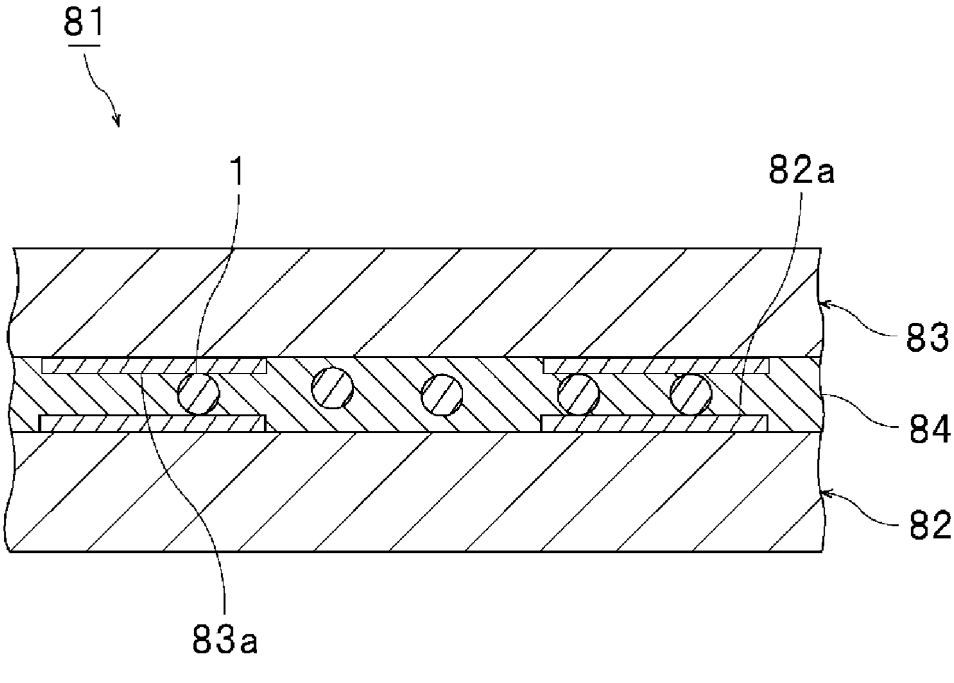

## INTERNATIONAL SEARCH REPORT

International application No.
**PCT/JP2024/029862**

### A. CLASSIFICATION OF SUBJECT MATTER

***H01B 1/22***(2006.01)i; ***C09J 9/02***(2006.01)i; ***C09J 11/04***(2006.01)i; ***C09J 163/00***(2006.01)i; ***H01R 11/01***(2006.01)i
FI: H01B1/22 A; C09J11/04; C09J163/00; H01R11/01 501A; H01R11/01 501C; C09J9/02

According to International Patent Classification (IPC) or to both national classification and IPC

### B. FIELDS SEARCHED

Minimum documentation searched (classification system followed by classification symbols)

H01B1/22; C09J9/02; C09J11/04; C09J163/00; H01R11/01

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2016/194952 A1 (DEXERIALS CORP.) 08 December 2016 (2016-12-08) paragraphs [0021], [0071], [0089], [0090] | 1-4, 7, 8, 12, 13, 19-22 |
| Y | | 15-18 |
| X | JP 2018-60709 A (SEKISUI CHEMICAL CO., LTD.) 12 April 2018 (2018-04-12) paragraphs [0106]-[0111], [0130] | 1, 5, 6, 8-10, 19-22 |
| Y | | 15-18 |
| X | WO 2009/054386 A1 (NIPPON CHEMICAL INDUSTRIAL CO., LTD.) 30 April 2009 (2009-04-30) paragraphs [0051], [0062] | 1, 8, 9, 12-14, 19-22 |
| Y | | 15-18 |
| X | WO 2017/033934 A1 (SEKISUI CHEMICAL CO., LTD.) 02 March 2017 (2017-03-02) paragraphs [0211], [0240] | 1, 4, 6-13, 19-22 |
| Y | | 15-18 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 October 2024** | **12 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/029862**

**C. DOCUMENTS CONSIDERED TO BE RELEVANT**

| Category* | Citation of document, with indication, where appropriate, of the relevant passages | Relevant to claim No. |
|---|---|---|
| Y | JP 2012-142271 A (SEKISUI CHEMICAL CO., LTD.) 26 July 2012 (2012-07-26) paragraphs [0072], [0078], [0130] | 15-18 |
| Y | JP 2016-79313 A (KYOCERA CHEM CORP.) 16 May 2016 (2016-05-16) paragraph [0030] | 15, 16 |
| Y | JP 2018-145418 A (DEXERIALS CORP.) 20 September 2018 (2018-09-20) paragraph [0011] | 17, 18 |

Form PCT/ISA/210 (second sheet) (July 2022)

**INTERNATIONAL SEARCH REPORT**
**Information on patent family members**

International application No.
**PCT/JP2024/029862**

| Patent document cited in search report | Publication date (day/month/year) | Patent family member(s) | Publication date (day/month/year) |
|---|---|---|---|
| WO 2016/194952 A1 | 08 December 2016 | US 2018/0171184 A1<br>paragraphs [0032], [0082], [0099], [0100] | |
| JP 2018-60709 A | 12 April 2018 | (Family: none) | |
| WO 2009/054386 A1 | 30 April 2009 | US 2010/0219382 A1<br>paragraphs [0099], [0100], table 2 | |
| WO 2017/033934 A1 | 02 March 2017 | CN 107636773 A<br>KR 10-2018-0042148 A | |
| JP 2012-142271 A | 26 July 2012 | (Family: none) | |
| JP 2016-79313 A | 16 May 2016 | (Family: none) | |
| JP 2018-145418 A | 20 September 2018 | KR 10-2019-0104625 A<br>CN 110300780 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006144018 A
- JP 2013124330 A